# EUROPEAN PATENT SPECIFICATION

(11) **EP 4 248 171 B1**
(45) Date of publication and mention of the grant of the patent: **06.05.2026**
(21) Application number: 21894197.9
(22) Date of filing: 18.11.2021
(51) Int. Cl.: G01B 11/26, G01C 9/06

(54) **OPTICAL-BASED VALIDATION OF ORIENTATIONS OF SURFACES**
OPTISCHE VALIDIERUNG VON AUSRICHTUNGEN VON OBERFLÄCHEN
VALIDATION OPTIQUE D'ORIENTATIONS DE SURFACES

(30) Priority: 18.11.2020 US 202063115125 P
(43) Date of publication of application: 27.09.2023
(73) Proprietor: Lumus Ltd., 7403631 Ness Ziona (IL)
(72) Inventor: EISENBERG, Ido, 7403631 Nes Ziona (IL)
(74) Representative: Kancelaria Eupatent.pl Sp. z o.o.
(86) International application number: PCT/IL2021/051377
(87) International publication number: WO 2022/107140

(56) References cited:
- CN-U- 202 757 593
- DE-U1- 202013 003 898
- JP-A- 2003 065 739
- JP-A- 2003 065 739
- JP-A- 2008 267 942
- JP-A- H09 304 036
- JP-A- H09 304 036
- US-A- 4 056 323
- US-A1- 2012 274 751
- JARAMILLO-NUNEZ A ET AL: "MEASURING THE ANGLES AND PYRAMIDAL ERROR OF HIGH-PRECISION PRISMS", OPTICAL ENGINEERING, SOC. OF PHOTO-OPTICAL INSTRUMENTATION ENGINEERS, BELLINGHAM, vol. 36, no. 10, 1 October 1997 (1997-10-01), pages 2868 - 2871, XP000729477, ISSN: 0091-3286, DOI: 10.1117/1.601516
- QI ERHUI; HU HAIXIANG; HU HAIFEI; COLE GLEN; LUO XIAO; FORD VIRGINIA; ZHANG XUEJUN: "The application of pentaprism scanning technology on the manufacturing of M3MP", PROCEEDINGS OF SPIE, SPIE, US, vol. 9682, 24 October 2016 (2016-10-24), US , pages 96821A - 96821A-7, XP060074644, ISBN: 978-1-5106-1533-5, DOI: 10.1117/12.2245813

## Description

### TECHNICAL FIELD

The present disclosure relates generally to methods and systems for surface-metrology of samples.

### BACKGROUND

Optical elements, such as glass prisms, are increasingly required to exhibit higher angular tolerances between surfaces thereof. To meet the required angular tolerances, high-precision metrology for validating the angles between surfaces is necessitated, which, in turn, necessitates use of high-end optical components, and complex alignment and calibration procedures. There is thus an unmet need in the art for simple and easily implementable metrology techniques, which avoid the use of high-end optical components, thereby addressing mass production demands.

US4056323A discloses an interferometer optical system for general use to measure optical parallelism or relative rotational or joint translational positions of the two spaced subject mirrors uses coherent light split into two beams which are directed, one normal to one of the two mirrors and the other normal to the other of the two mirrors.

JP2003065739A discloses a device for measuring angle of polygon mirror that includes a laser light source, a half mirror which splits a laser beam in order to make laser beams enter two adjoining surfaces of the polygon mirror at the same time, and a CCD camera which simultaneously detects reflecting light from the polygon mirror, and reduces the measurement time by simultaneously detecting angles of the two surfaces when measuring the angular accuracy of a polygon mirror and the deviation of pyramid.

JPH09304036A discloses an angle measuring apparatus sheds collimated light emitted from first laser optic systems and second laser optic systems respectively to both two faces including a reference prism whose angle of interest has been measured and a prism to be measured located at a position with the reference prism placed.

A publication "Measuring the angles and pyramidal error of high-precision prisms" by Jaramillo-Nunez A et al. (in Oprical Engineering, Soc. of Photo-Optical Instrumentation Engineers, Bellingham, vol. 36 no. 10, pages 2868-2871) discloses use of a Twyman-Green interferometer to measure the wedge angles and pyramidal errors of high-precision optical prisms.

### SUMMARY

Aspects of the disclosure, according to some embodiments thereof, relate to methods and systems for surface-metrology of samples. More specifically, but not exclusively, aspects of the disclosure, according to some embodiments thereof, relate to optical-based methods and systems for metrology of external surfaces of samples. However, the claims define optical-based systems and methods.

The present application discloses fast, simple, and precise methods and systems for measuring the inclination of an external, flat surface of a sample relative to one or more other external, flat surfaces thereof. To achieve this, two parallel-prepared light beams (LBs) may be employed: The first LB is impinged on an external, flat first surface of the sample. The second LB is redirected so as to *nominally* impinge on an external, flat second surface of the sample - whose inclination angle relative to the first surface is to be validated - at the same incidence angle as the first LB. The angular deviation between the reflected LBs, after the second reflected LB has been redirected again, is then measured. Advantageously, according to some embodiments of the disclosed technology, a collimated light source, a light sensor (or image sensor), a light folding component to redirect the second LB, and orienting infrastructure to orient the sample suffice in order to validate inclinations of external, flat surfaces.

Thus there is provided an optical-based method for validating angles between external, flat surfaces of samples. The method includes:
- Providing a sample including an external, flat first surface and an external, flat second surface nominally inclined (intended by design and fabrication to be inclined) at a nominal inclination angle relative to the first surface.
- Generating a first incident light beam (LB), directed at the first surface, and a second incident LB parallel to the first incident LB.
- Obtaining a first returned LB by reflection of the first incident LB off the first surface.
- Obtaining a second returned LB by folding the second incident LB at a light folding angle nominally equal to the nominal inclination angle, reflecting the folded LB off the second surface, and folding the reflected LB at the light folding angle.
- Measuring a first angular deviation of the second returned LB relative to the first returned LB.
- Deducing an actual inclination angle of the second surface relative to the first surface, based at least on the measured first angular deviation.

According to some embodiments of the method, the deduced actual inclination angle equals α + δ/2, or about equals α + δ/2 (e.g. the deduced actual inclination angle is between α + 0.475 · δ and α + 0.525 · δ, between α + 0.45 · δ and α + 0.55 · δ, or even between α + 0.4 · δ and α + 0.6 · δ, each possibility corresponds to separate embodiments). α is the nominal inclination angle. δ is the measured value of the first angular deviation.

According to some embodiments of the method, the first incident LB is directed at the first surface perpendicularly to the first surface.

According to some embodiments of the method, the folding is implemented utilizing a light folding component (LFC), which is or includes a prism, one or more mirrors, and/or a diffraction grating.

The light folding angle is insensitive to variations in a pitch of the LFC.

According to some embodiments of the method, the LFC is or includes a pentaprism or a like-function prism, or a pair of mirrors set at an angle relative to one another or a like-function mirror arrangement.

According to some embodiments of the method, the sample is or includes glass, polymer, metal, crystal, and/or a combination thereof.

According to some embodiments of the method, the sample is a prism.

According to some embodiments of the method, the second surface does not share a common edge with the first surface.

The first incident LB and the second incident LB are complementary portions of a single collimated LB.

According to some embodiments of the method, the first incident LB and the second incident LB are prepared by blocking one or more portions of a single collimated LB.

According to some embodiments of the method, the single collimated LB is polychromatic.

According to some embodiments of the method, the single collimated LB is a laser beam.

According to some embodiments of the method, the first angular deviation is measured using an autocollimator.

According to some embodiments of the method, the first angular deviation between the returned LBs is equal to, or about equal to, Δ*ulf.* Δ*u* is a difference between a coordinate of a first spot and a corresponding coordinate of a second spot on a photosensitive surface of the autocollimator. f is the focal length of a collimating lens of the autocollimator. The first spot is formed by the first returned LB and the second spot is formed by the second returned LB.

According to some embodiments of the method, the method further includes an initial calibration stage, wherein a gold standard sample is utilized to calibrate the system.

According to some embodiments of the method, the nominal inclination angle is obtuse.

According to some embodiments of the method, the nominal inclination angle is acute.

According to some embodiments of the method, wherein the nominal inclination angle is 90° and the sample includes an external, flat third surface parallel to the first surface, the method further includes, following the measuring of the first angular deviation:
- Flipping the sample, so as to invert the first and third surfaces while maintaining a nominal orientation of the second surface relative to the LFC.
- Preparing a third incident LB, directed at the third surface, and a fourth incident LB parallel to the third incident LB.
- Obtaining a third returned LB by reflection of the third incident LB off the third surface.
- Obtaining a fourth returned LB by folding the fourth incident LB at a light folding angle nominally equal to the nominal inclination angle, reflection thereof off the second surface, and folding thereof at the light folding angle.
- Measuring a second angular deviation of the fourth returned LB relative to the third returned LB.

In the deducing of the actual inclination angle, the actual inclination angle is deduced additionally taking into account the measured second angular deviation.

According to some embodiments of the method, an uncertainty in the parallelism of the first surface and the third surface is smaller than a required measurement precision of the actual inclination angle.

According to some embodiments of the method, the deduced actual inclination angle is equal to χ *+* (δ₁ - δ₂)/4, or about equal to χ + (δ₁ - δ₂)/4 (e.g. the deduced actual inclination angle is between χ + 0.235 · (δ₁ - δ₂) and χ + 0.265 · (δ₁ - δ₂), between χ + 0.225 · (δ₁ - δ₂) and χ + 0.275 · (δ₁ - δ₂), or even between χ + 0.2 · (δ₁ - δ₂) and χ + 0.3 · (δ₁ - δ₂), each possibility corresponds to separate embodiments). χ is the nominal inclination angle. δ₁ and is the measured first angular deviation and δ₂ is the measured second angular deviation.

According to some embodiments of the method, the method further includes, contingent on the sample including an external, flat fourth surface, which is nominally parallel to the second surface, suppressing internal reflection from the fourth surface.

There is provided an optical-based system for validating angles between external, flat surfaces of samples. The system includes:
- A light folding component (LFC) nominally configured to fold light incident thereon at a nominal inclination angle defined by an external, flat first surface of a sample and an external, flat second surface of the sample.
- An illumination and collection arrangement (ICA) including:
   ▪ A light generation assembly to (*a*) project a first incident light beam (LB) on the first surface, so as to generate a first returned LB by reflection off the first surface, and (b) project a second incident LB on the LFC, in parallel to the first incident LB, so as to generate a second returned LB, by reflection off the second surface and repassage via the LFC.
   ▪ At least one sensor, configured to measure a first angular deviation between the first returned LB and the second returned LB, and/or an eyepiece assembly configured to enable manually measuring the first angular deviation.

The measured first angular deviation is indicative of an actual inclination angle of the second surface relative to the first surface.

According to some embodiments of the system, the light generation assembly includes a light source and optical equipment.

According to some embodiments of the system, the system further includes orienting infrastructure configured to orient the sample such that the first incident LB normally (i.e. perpendicularly) impinges on the first surface, and/or a folded LB, obtained by folding of the second incident LB by the LFC, nominally normally impinges on the second surface.

According to some embodiments of the system, wherein the system includes the at least one sensor, the system further includes a computational module configured to compute the actual inclination angle of the second surface relative to the first surface, based at least on the measured first angular deviation.

According to some embodiments of the system, wherein the system includes the at least one sensor, the ICA is or includes an autocollimator. The autocollimator includes the light source and the at least one sensor.

According to some embodiments of the system, the ICA further includes a pair of blocking elements configured to allow selectively blocking each of the first incident LB and the second incident LB. According to some such embodiments, the blocking elements are shutters that fully block light beams incident thereon.

According to some embodiments of the system, the LFC includes a prism, one or more mirrors, and/or a diffraction grating.

A light folding angle of the LFC is insensitive to variations in a pitch thereof.

According to some embodiments of the system, the LFC is or includes a pentaprism or a like-function prism, or a pair of mirrors set at an angle relative to one another or a like-function mirror arrangement.

According to some embodiments of the system, the system is configured to facilitate flipping the sample.

According to some embodiments of the system, wherein the system includes the at least one sensor and the computational module. The nominal inclination angle is 90° and the sample further includes an external, flat third surface, which is parallel to the first surface. The computational module is configured to compute the actual inclination angle additionally taking into account a measured second angular deviation of a fourth returned LB relative to a third returned LB. With the sample flipped, such that the first surface and the third surface are inverted, and a nominal orientation of the second surface relative to the LFC is maintained: (*a'*) the third returned LB is obtained by projecting a third incident light beam on the third surface of the sample, so as to generate the third returned LB by reflection off the third surface, and (*b'*) the fourth returned LB is obtained by projecting a fourth incident LB on the LFC, in parallel to the third incident LB, so as to generate the fourth returned LB by folding thereof by the LFC, reflection off the second surface, and repassage via the LFC.

According to some embodiments of the system, the computational module is further configured to compute an uncertainty in the obtained value of the actual inclination angle taking into account at least manufacturing tolerances and imperfections of the LFC and the ICA.

According to some embodiments of the system, wherein the system includes the orienting infrastructure, the computational module is configured to compute the uncertainty in the computed value of the actual inclination angle additionally taking into account manufacturing tolerances and imperfections of the orienting infrastructure.

According to some embodiments of the system, the light generation assembly includes a light source and optical equipment. The light source is configured to generate a single LB. The optical equipment is configured to collimate the single LB.

The first incident LB and the second incident LB are complementary portions of the collimated LB.

According to some embodiments of the system, the light source is a polychromatic light source.

According to some embodiments of the system, the light source is a monochromatic light source.

According to some embodiments of the system, the light source is configured to generate a laser beam.

According to some embodiments of the system, the at least one sensor includes a light sensor and/or an image sensor (e.g. a camera).

According to an aspect of some embodiments, there is provided a method for manufacturing samples having a pair of external, flat surfaces set at a nominal angle relative to one another. However, a method of manufacture is not claimed. The method includes stages of:
- Providing a raw sample.
- Processing the raw sample to obtain a processed sample including an external, flat first surface and an external, flat second surface, which is set at a test angle relative to the first surface.
- Measuring the test angle using the optical-based method of described above.
- If the test angle differs from a nominal angle by more than a predefined difference, subjecting the processed sample to further processing, to obtain a reprocessed sample.
- Repeating the stages of measuring and, if necessary, reprocessing until the difference between the test angle of the reprocessed sample and the nominal angle is smaller than the predefined difference.

Certain embodiments of the present disclosure may include some, all, or none of the above advantages. One or more other technical advantages may be readily apparent to those skilled in the art from the figures, descriptions, and claims included herein. Moreover, while specific advantages have been enumerated above, various embodiments may include all, some, or none of the enumerated advantages.

Unless otherwise defined, all technical and scientific terms used herein have the same meaning as commonly understood by one of ordinary skill in the art to which this disclosure pertains. In case of conflict, the patent specification, including definitions, governs. As used herein, the indefinite articles "a" and "an" mean "at least one" or "one or more" unless the context clearly dictates otherwise.

Unless specifically stated otherwise, as apparent from the disclosure, it is appreciated that, according to some embodiments, terms such as "processing", "computing", "calculating", "determining", "estimating", "assessing", "gauging" or the like, may refer to the action and/or processes of a computer or computing system, or similar electronic computing device, that manipulate and/or transform data, represented as physical (e.g. electronic) quantities within the computing system's registers and/or memories, into other data similarly represented as physical quantities within the computing system's memories, registers or other such information storage, transmission or display devices.

Embodiments of the present disclosure may include apparatuses for performing the operations herein. The apparatuses may be specially constructed for the desired purposes or may include a general-purpose computer(s) selectively activated or reconfigured by a computer program stored in the computer. Such a computer program may be stored in a computer readable storage medium, such as, but not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method(s). The desired structure(s) for a variety of these systems appear from the description below. In addition, embodiments of the present disclosure are not described with reference to any particular programming language. It will be appreciated that a variety of programming languages may be used to implement the teachings of the present disclosure as described herein.

Aspects of the disclosure may be described in the general context of computer-executable instructions, such as program modules, being executed by a computer. Generally, program modules include routines, programs, objects, components, data structures, and so forth, which perform particular tasks or implement particular abstract data types. Disclosed embodiments may also be practiced in distributed computing environments where tasks are performed by remote processing devices that are linked through a communications network. In a distributed computing environment, program modules may be located in both local and remote computer storage media including memory storage devices.

The invention is defined in the appended independent claims.

### BRIEF DESCRIPTION OF THE FIGURES

Some embodiments of the disclosure are described herein with reference to the accompanying figures. The description, together with the figures, makes apparent to a person having ordinary skill in the art how some embodiments may be practiced. The figures are for the purpose of illustrative description and no attempt is made to show structural details of an embodiment in more detail than is necessary for a fundamental understanding of the disclosure. For the sake of clarity, some objects depicted in the figures are not drawn to scale. Moreover, two different objects in the same figure may be drawn to different scales. In particular, the scale of some objects may be greatly exaggerated as compared to other objects in the same figure.

In the figures:
**Figure 1A** schematically depicts an optical-based system for external, flat surface metrology of samples, during inspection of a sample, according to some embodiments;
**Figure 1B** presents a schematic, perspective view the sample of **Fig. 1A****,** during the inspection thereof, according to some embodiments;
**Figure 1C** schematically depicts spots on a photosensitive surface of a sensor of the system of **Fig. 1A****,** according to some embodiments;
**Figures 2A** and **2B** schematically depicts an optical-based system for verifying perpendicularity of one external, flat surface of a sample with respect to two other parallel, external, flat surfaces thereof, during inspection of the sample, the system corresponds to specific embodiments of the system of **Fig. 1A****;**
**Figures 2C** and **2D** schematically depict spots on a photosensitive surface of a sensor of the system of **Figs. 2A** and **2B****,** according to some embodiments;
**Figure 3** schematically depicts an optical-based system for external, flat surface metrology of samples, during inspection of a sample, the system corresponds to specific embodiments of the system of **Fig. 1A****,** wherein a light folding component of the system is a prism;
**Figure 4** schematically depicts an optical-based system for external, flat surface metrology of samples, during inspection of a sample, the system corresponds to specific embodiments of the system of **Fig. 1A****,** wherein a light folding component of the system is a mirror;
**Figure 5** presents a flowchart of an optical-based method for external, flat surface metrology of samples, according to some embodiments; and
**Figure 6** presents a flowchart of an optical-based method for validating perpendicularity of one external, flat surface of a sample with respect to two other parallel, external, flat surfaces thereof, according to some embodiments.

### DETAILED DESCRIPTION

The principles, uses, and implementations of the teachings herein may be better understood with reference to the accompanying description and figures. Upon perusal of the description and figures present herein, one skilled in the art will be able to implement the teachings herein without undue effort or experimentation. In the figures, same reference numerals refer to same parts throughout.

In the description and claims of the application, the words "include" and "have", and forms thereof, are not limited to members in a list with which the words may be associated.

As used herein, the term "about" may be used to specify a value of a quantity or parameter (e.g. the length of an element) to within a continuous range of values in the neighborhood of (and including) a given (stated) value. According to some embodiments, "about" may specify the value of a parameter to be between 80 % and 120 % of the given value. For example, the statement "the length of the element is equal to about 1 m" is equivalent to the statement "the length of the element is between 0.8 m and 1.2 m". According to some embodiments, "about" may specify the value of a parameter to be between 90 % and 110 % of the given value. According to some embodiments, "about" may specify the value of a parameter to be between 95 % and 105 % of the given value.

As used herein, according to some embodiments, the terms "substantially" and "about" may be interchangeable.

For ease of description, in some of the figures a three-dimensional cartesian coordinate system is introduced. It is noted that the orientation of the coordinate system relative to a depicted object may vary from one figure to another. Further, the symbol ⊙ may be used to represent an axis pointing "out of the page", while the symbol ⊗ may be used to represent an axis pointing "into the page".

In the figures, optional elements and optional stages (in flowcharts) are delineated by a dashed line.

### Systems

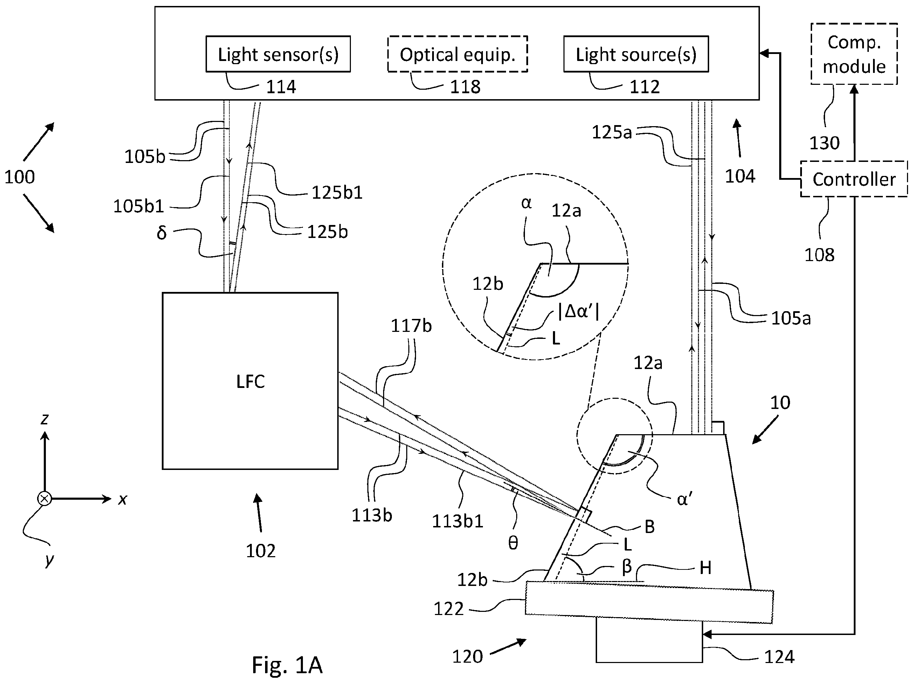

According to an aspect of some embodiments, there is provided an optical-based system for metrology of external, flat surfaces of samples. **Fig. 1A** schematically depicts such a system, an optical-based system **100,** according to some embodiments. Optical-based system **100** is configured for validating the angle between two external, flat surfaces of a sample. **Fig. 1A** provides a side-view of system **100** and a sample **10,** according to some embodiments. (It is to be understood that sample **10** does not constitute a part of system **100.)** Sample **10** is shown being inspected by system **100.** Sample **10** may be any opaque or partially transparent element having two or more reflective, flat (external) surfaces, which are set at a (non-vanishing) angle relative to one another. According to some embodiments, sample **10** may be made of glass, polymer, metal, crystal, and/or a combination thereof. According to some embodiments, sample **10** may be an optical element, such as a prism, a waveguide, or a beam splitter. According to some embodiments, the prism may be shaped as a polyhedron. According to some embodiments, and as depicted in **Fig. 1A****,** a cross-section of sample **10,** taken in parallel to the *zx*-plane, may define a polygon.

Sample **10** includes an external, flat first surface **12a** (i.e. a first external surface, which is flat) and an external, flat second surface **12b** (i.e. a second external surface, which is flat). Sample **10** is manufactured to exhibit a nominal inclination angle α between first surface **12a** and second surface **12b.** However, due to fabrication imperfections an actual inclination angle between first surface **12a** and second surface **12b,** labelled in **Fig. 1A** as α', will generally differ from the nominal inclination angle α. A dashed line L is shown in **Fig. 1A** intersecting second surface **12b** and is inclined at the nominal inclination angle α relative to first surface **12a.** The dashed line L indicates the intended inclination of second surface **12b.** The nominal inclination angle α may be acute (i.e. α < 90°), obtuse (i.e. α > 90°), or equal to 90°.

Also shown in **Fig. 1A** is a (straight) dotted line H extending in parallel to first surface **12a** and intersecting second surface **12b.** A supplementary angle to the nominal inclination angle α, labelled as β (i.e. β = 180° - α), is spanned between second surface **12b** and the dotted line H.

According to some embodiments, system **100** includes a light folding component (LFC) **102** and an illumination and collection arrangement (or assembly; ICA) **104.** System **100** may further include a controller **108** functionally associated with ICA **104** and configured to control operation thereof. According to some embodiments, and as depicted in **Fig. 1A****,** ICA **104** includes a light source **112** (or a plurality of light sources) and a sensor **114** (or a plurality of sensors), and, optionally, optical equipment **118.** According to some embodiments, sensor **114** is a light sensor or an image sensor (or the plurality of sensors includes one or more light sensors and/or one or more image sensors, e.g. cameras). According to some alternative embodiments, not depicted in **Fig. 1A****,** ICA **104** includes an eyepiece assembly in place of sensor **114,** being thereby configured for visual determination (i.e. by eye) of the actual inclination angle. Light source **112** and optical equipment **118** are collectively referred to as "light generation assembly".

As described in detail below, ICA **104** is configured to output a pair of parallel light beams (LBs): a first LB **105a** (also referred to as "first incident LB"; indicated in **Fig. 1A** by a pair of parallel light rays) and a second LB **105b** (also referred to as "second incident LB"; indicated in **Fig. 1A** by a pair of parallel light rays). According to some such embodiments, optical equipment **118** may be configured to collimate light generated by light source **112,** and thereby produce the (parallel) incident LBs **105a** and **105b.** According to such embodiments, optical equipment **118** may include a collimating lens or a collimating lens assembly (not shown).

Incident LBs **105a** and **105b** form complementary portions of a collimated light beam (which has been focused by the collimating lenses or collimating lens assembly). Alternatively, according to some non-claimed embodiments, incident LBs **105a** and **105b** may be spaced apart (and parallel). According to some such embodiments, optical equipment **118** may further include one or more optical filters (e.g. a light absorbing filter or an opaque plate), and/or one or more beam splitters, and, optionally, one or more mirrors (not shown), configured to prepare from the collimated LBs a pair of spaced apart and parallel LBs.

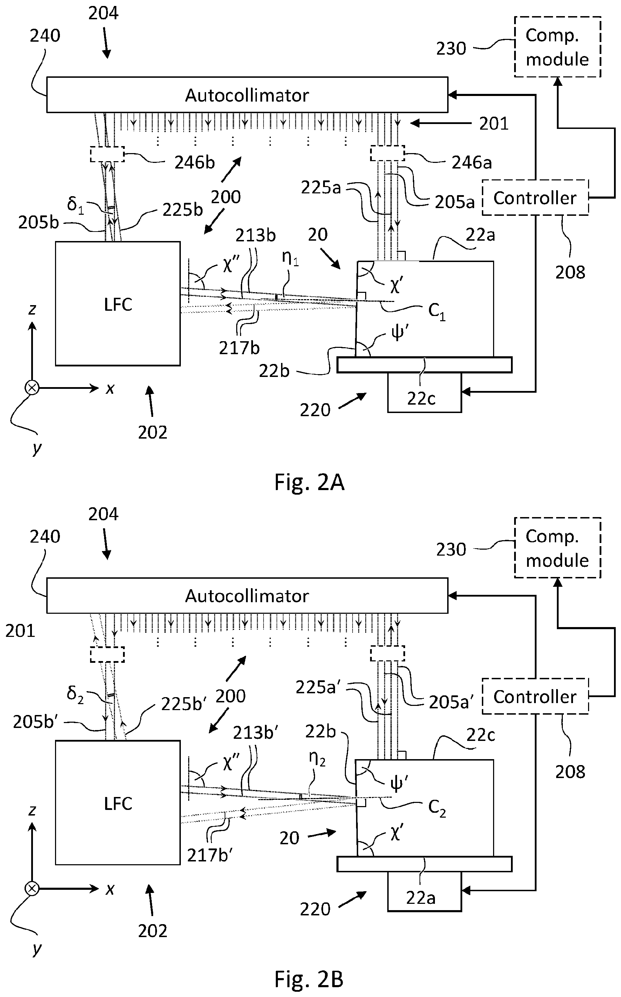

According to some embodiments, optical equipment **118** may include a plurality of blocking elements (such as the pair of blocking elements depicted in **Figs. 2A** and **2B****)** configured to allow selectively blocking each of incident LBs **105,** and thereby allow separately sensing of each of the returned LBs induced by first incident LB **105a** and second incident LB **105b,** respectively. As used herein, the term "blocking element", with reference to an optical element, is be construed broadly as encompassing both controllably openable and closable opaque elements (such as shutters) configured to (when closed) block light beams incident thereon, and filtering elements (such as spectral filters) configured to block, whether fully or partially, one or more parts of an optical spectrum (e.g. the visible spectrum).

According to some cmbodiments, light source **112** may be configured to produce polychromatic light. According to some such cmbodiments, a spectrum of the light may be controllable. According to some embodiments, light source **112** may be configured to produce monochromatic light. In this regard it is noted that use of monochromatic light may be preferable when the LFC **102** is a prism and second incident LB **105b** is generated so as to non-perpendicularly impinge on the prism (e.g. when first incident LB **105a** is generated to non-perpendicularly impinge first surface **12a).**

According to some embodiments, ICA **104** is or includes an autocollimator (i.e. light source **112,** sensor **114,** and some or all of optical equipment **118** constitute components of the autocollimator). According to some embodiments, incident LBs **105** constitute adjacent sub-beams of a single, broad, and collimated LB generated by the autocollimator. According to such cmbodiments, optical equipment **118** may include an optical filter configured to transmit two sub-beams (such as incident LBs **105)** of the collimated LB, prepared by the autocollimator and incident on the optical filter (with the parallelism of the two sub-beams being maintained on emergence from the optical filter).

According to some embodiments, light source **112** may be configured to produce a collimated laser beam. According to some such embodiments, optical equipment **118** may include a beam expander (not shown) configured to increase the diameter of the laser beam, such that the expanded laser beam may simultaneously impinge on both sample **10** and LFC **102.** In such embodiments, first incident LB **105a** and second incident LB **105b** constitute complementary portions of the laser beam. Alternatively, optical equipment **118** may include a beam splitter and optics configured to divide the laser beam into a pair of parallel (spaced-apart) sub-beams: a first sub-beam and a second sub-beam, which constitute first incident LB **105a** and second incident LB **105b,** respectively. According to some such embodiments, optical equipment **118** may be configured to recombine the returned sub-beams (i.e. first returned LB **133a** and second returned LB **133b),** such that each of the sub-beams is redirected onto a single light sensor (i.e. sensor **114** according to some embodiments thereof) and is focused (e.g. using a lens or a lens arrangement) on a photosensitive surface of the light sensor. Ideally, if the second sub-beam (after redirection by LFC **122** and transmission into sample **10)** perpendicularly impinges on internal facet **14,** then the recombined sub-beams will form a collimated (second) laser beam and the two spots, formed by the returned sub-beams on the light sensor, will overlap. According to some other embodiments, two light sensors - such that the distance and a relative orientation therebetween, is known - may be employed. In such embodiments, each of the returned sub-beams may be directed to a different light sensor from the two light sensors.

According to some embodiments, ICA **104** may be configured for interferometry: Light source **112,** some or all of optical equipment **118,** and sensor **114** constitute components of an interferometric setup, as described below. In such embodiments, light source **112** may be configured to generate a coherent, planar wavefront. Optical equipment **118** may be configured to split the generated wavefront into two wavefronts: a first (coherent, planar) incident wavefront and a second (coherent, planar) incident wavefront, which constitute first incident LB **105a** and second incident LB **105b,** respectively.

According to some embodiments, LFC **102** is or includes a prism, one or more mirrors, and/or a diffraction grating. LFC **102** is a pentaprism or a like-function prism that is insensitive to variations in pitch (in the sense that the light folding angle thereof remains unchanged when the pitch of the LFC is slightly changed, i.e. when LFC **102** is slightly rotated about the *y*-axis).

According to some embodiments, system **100** may further include orienting infrastructure **120** for orienting sample **10** relative to ICA **104.** As a non-limiting example, orienting infrastructure **120** may be in the form of a stage **122** mounted on a base **124.** Stage **122** is configured for mounting thereon a sample, such as sample **10.** Base **124** is configured to orient and, optionally, translate stage **122.** According to some embodiments, base **124** may be configured to afford manipulation of sample **10** in each of six degrees of freedom (i.e. translations in any direction, and rotations about the yaw axis, and (at least limited) rotations about the pitch and roll axes). In particular, orienting infrastructure **120** may be configured to orient sample **10,** such that first incident LB **105a** will perpendicularly impinge on first surface **12a,** and such that a folded LB **113b** - obtained by the impinging of second incident LB **105b** on LFC **102** - will *nominally* perpendicularly impinge on second surface **12b.** According to some embodiments, orienting infrastructure **120** may be functionally associated with controller **108** and is configured to be controlled thereby.

As used herein, according to some embodiments, the terms "nominally" and "ideally" may be interchangeable. An object may be said to "nominally" exhibit (i.e. be characterized by) an intrinsic property, such as an inclination angle between flat surfaces of the sample, when the object is intended by design and fabrication to exhibit the property but, in practice, due to manufacturing tolerances, the object may actually only imperfectly exhibit the property. The same applies to an extrinsic property of an object, such as the light propagation direction of a light beam. In this case, it is to be understood that the object has intentionally been prepared, or otherwise manipulated, to ideally exhibit the property but, in practice, due to inherent imperfections, e.g. in a setup used for the preparation, the object may actually only imperfectly exhibit the property.

In operation, first incident LB **105a** is directed at sample **10** and second incident LB **105b** is directed at LFC **102.** According to some embodiments, and as depicted in **Fig. 1A****,** first incident LB **105a** is incident on first surface **12a** perpendicularly thereto. First incident LB **105a** (or at least a portion thereof) is reflected off first surface **12a** - as indicated by a first returned LB **125a** - and is sensed by sensor **114.**

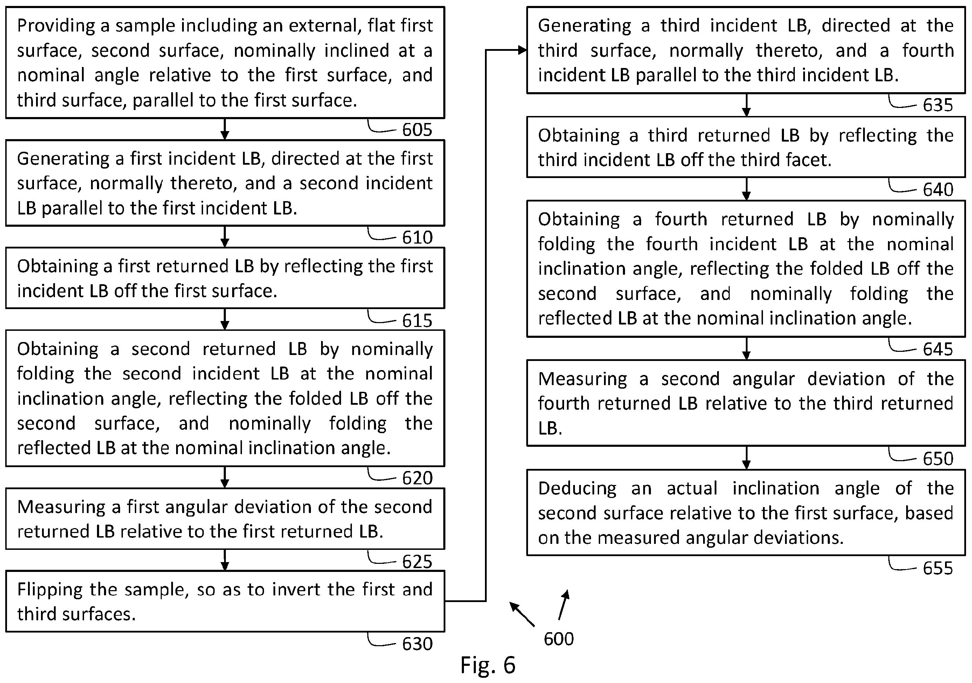

Second incident LB **105b** is directed at LFC **102.** LFC **102** is nominally configured to fold second incident LB **105b** at the nominal inclination angle α. More precisely, LFC **102** is configured to "fold" (i.e. redirect) second incident LB **105b,** such that folded LB **113b** (obtained by the folding of second incident LB **105b)** is *nominally* directed at the nominal inclination angle α relative to second incident LB **105b** and (nominally) perpendicularly to second surface **12b.** In practice, due to manufacturing imperfections, an actual light folding angle α" of LFC **102** may slightly deviate from the nominal inclination angle α. When the uncertainty in the light folding angle (due to the manufacturing tolerance) of LFC **102** is significantly lower than the accuracy to which the actual inclination angle of second surface **12b** is to be determined, the uncertainty in the light folding angle may be neglected (i.e. LFC **102** may be assumed to fold second incident LB **105a** at precisely the nominal inclination angle α). Otherwise, the uncertainty in the light folding angle will contribute (non-negligibly) to the overall uncertainty in the measured value of the actual inclination angle, *unless the nominal inclination angle is equal to 90*°, *in which case, through the implementation of additional measurements with the sample flipped, the deviation in the actual folding angle may be discounted,* as detailed below in the description of **Figs. 2A** and **2B** and in the description of **Fig. 6****.**

In order to keep the figures uncumbersome, only two light rays of each light beam are typically indicated. Further, the depiction of the light beams is schematic, and it is to be understood that depicted light beams may be wider or narrower than drawn. Thus, for example, according to some embodiments, first incident LB **105a** may impinge over all of first surface **12a,** and/or second incident LB **105b** may impinge over all of a light receiving surface of LFC **102.**

Folded LB **113b** impinges on second surface **12b** at an incidence angle θ. Angles are measured clockwise from the point-of-view of a reader perusing the figures. Values of angles greater than 180° being set to negative by subtracting 360°. Thus, as a non-limiting example intended to facilitate the description by making it more concrete, in **Fig. 1A****,** the incidence angle θ is negative and the return angle (i.e. the reflection angle) is positive. More precisely, the incidence angle θ is shown spanned counter-clockwise from a dotted line B - which indicates a normal to second surface **12b** - to a light ray **113b1** (one of the two light rays indicating folded LB **113b** in **Fig. 1A****).** The inclination angles α and α' are measured clockwise from first surface **12a** (as a non-limiting example, intended to facilitate the description, in **Fig. 1A** α' is shown as being greater than α). The nominal inclination angle α is spanned clockwise from first surface **12a** to the dashed line L. The actual inclination angle α' is spanned clockwise from first surface **12a** to second surface **12b.**

The incidence angle θ depends on the deviation Δα' = α - α' (i.e. the deviation in the inclination of second surface **12b** from the nominal inclination) and the deviation Δα" = α - α" (i.e. the deviation in the actual light folding angle of LFC **102** from α). Absent any imperfections in system **100** (i.e. α" = α), the incidence angle θ would equal Δα'. Put differently, the incidence angle θ equals Δα' to a precision dependent on the uncertainty in the actual light folding angle α" and any other relevant uncertainties in parameters of LFC **102,** ICA **104,** and orienting infrastructure **120** (i.e. the orientation precision thereof). In particular, system **100** is configured to have output LB **113b** nominally normally (i.e. perpendicularly) impinge on second surface **12b** when Δα' = 0. The magnitude of Δα' (i.e. |Δα'|, wherein the brackets denote the absolute value) is indicated in **Fig. 1A****.**

Folded LB **113b** (or at least a portion thereof) is specularly reflected off second surface **12b** (i.e. at a return angle θ*_{R}* equal to minus the incidence angle θ), as indicated by a reflected LB **117b.** Reflected LB **117b** travels back towards LFC **102** and is folded by LFC **102** at the actual light folding angle α". More precisely, reflected LB **117b** is redirected by LFC **102** towards ICA **104,** as indicated by a second returned LB **125b.** Second returned LB **125b** is sensed by sensor **114.**

Typically, due to the manufacturing imperfections of both sample **10** and LFC **102,** second returned LB **125b** will not be parallel to first returned LB **125a.** An angle δ - also referred to as "the angular deviation" - between first returned LB **125a** and second returned LB **125b** equals 2 · θ*_{R}*, and thus depends on Δα'. The angle δ is shown spanned clockwise from a light ray **105b1** (one of the two light rays indicating second incident LB **105b** in **Fig. 1A****)** to a light ray **125b1** (one of the two light rays indicating second returned LB **125b** in **Fig. 1A****),** and is therefore positive in **Fig. 1A****.**

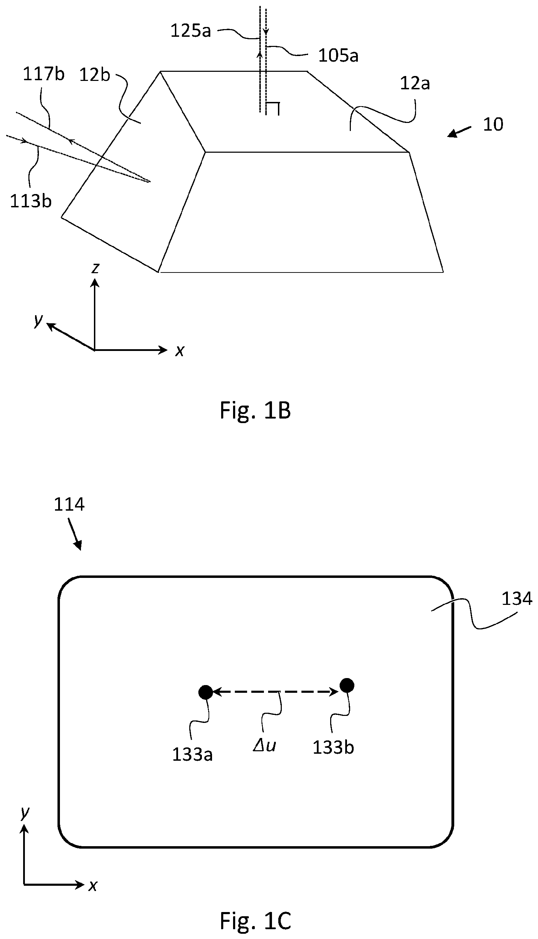

Referring also to **Fig. 1B, Fig. 1B** presents a schematic, perspective view sample of **10** during the inspection thereof by system **100.** Also indicated in **Fig. 1B** are first incident LB **105a,** first returned LB **133a,** folded LB **113b** (which is to be understood as nominally perpendicularly impinging on second surface **12b),** and reflected LB **117b.**

**Fig. 1C** schematically depicts a first spot **133a** and a second spot **133b** formed by first returned LB **125a** and second returned LB **125b,** respectively, on a photosensitive surface **134** of sensor **114,** according to some embodiments. *u*₁ and *u*₂ are the horizontal coordinates (i.e. as measured along the x-axis) of first spot **133a** and second spot **133b,** respectively. (The coordinate system depicted in **Fig. 1C** is assumed to coincide with the coordinate system depicted in **Fig. 1A** up to a possible translation of the origin. The x-axis in **Fig. 1C** thus extends from second incident LB **105b** to first incident LB **105a** in parallel to first surface **12a.)** The angle δ may be directly inferred from the difference Δ*u* = *u*₂ *- u*₁. As a non-limiting example, when the measurement is autocollimator-based (i.e. in embodiments wherein ICA **104** is or includes an autocollimator), δ *=* Δ*u*/*f,* so that Δα' = -Δ*u*/(2 · *f*), wherein *f* is the focal length of the collimating lens of the autocollimator. (More precisely, Δα' equals -Δ*u*/(2 · *f*) to a precision dependent on the uncertainty in the actual light folding angle α" and any other relevant uncertainties in parameters of LFC **102,** ICA **104,** and orienting infrastructure **120).**

According to some embodiments, and as depicted in **Fig. 1C****,** the vertical coordinates (i.e. as measured along the y-axis) of first spot **133a** and second spot **133b** may slightly differ from one another due to LFC **102** and sample **10** being misaligned, e.g. in terms of the respective yaw (i.e. around the *z*-axis) angles thereof. Such potential misalignment may be minimized during calibration of system **100** using, for example, an autocollimator.

Alternatively, according to some embodiments, wherein ICA **104** is or includes an interferometric setup, the angle δ may be deduced from an interference pattern formed by first returned LB **125a** and second returned LB **125b.** More specifically, in such embodiments, first returned LB **125a** constitutes a first returned wavefront, obtained from reflection of the first incident wavefront off first surface **12a,** and second returned LB **125b** constitutes a second returned wavefront, obtained by folding of the second incident wavefront by LFC **102,** reflection off second surface **12b,** and folding again by LFC **102.** The returned wavefronts are recombined and an interference pattern thereof is measured by sensor **114.** If the first wavefront and the second wavefront impinge normally on the respective surface (i.e. first surface **12a** or second surface **12b,** respectively), the recombined wavefront will form a uniform pattern on sensor **114.** If second surface **12b** deviates from the nominal inclination, then the recombined wavefront will form a periodic pattern on sensor **114.** The deviation Δα' may be deduced from the periodicity of the pattern.

According to some embodiments, controller **108** may be communicatively associated with a computational module **130.** Computational module **130** may include a processor(s) and volatile and/or non-volatile memory components. The processor may be configured to receive from controller **130** sensor **114** data (i.e. the values of *u*₁ and *u*₂), and, based thereon, compute Δα'. Optionally, according to some embodiments, the processor may further be configured to compute an uncertainty in the (computed value of) Δα' taking into account manufacturing tolerances and imperfections of LFC **102** (including the uncertainty in the actual light folding angle), ICA **104,** and orienting infrastructure **120.** According to some embodiments, computational module **130** may be included in system **100.**

According to some embodiments, system **100** may further include two shutters (positioned similarly to the blocking elements in **Figs. 2A** and **2B****)** configured to allow selectively blocking each of first returned LB **125a** and second returned LB **125b,** so that each of returned LBs **125** may be separately sensed (thereby facilitating attributing each of spots **133** to the returned LB that induced the spot).

According to some embodiments, first surface **12a** and second surface **12b** may be coated, or temporarily coated, by a reflective coating, so that light incident thereon is maximally reflected or reflection therefrom is at least increased. According to some embodiments, wherein light source **112** is configured to generate polychromatic light, first surface **12a** may be coated a first coating configured to reflect light in a first spectrum, and second surface **12b** (or LFC **102)** may be coated by a second coating configured to reflect light in a second spectrum, which does not, or substantially does not, overlap with the first spectrum. In such embodiments, selective blocking of first returned LB **125a** and second returned LB **125b** may be implemented using a spectral filter or a spectral filter arrangement (optionally, instead of shutters), positioned such that each of returned LBs **125** is incident thereon, and configured to allow selectively blocking or at least partially blocking light in the second spectrum and first spectrum, respectively.

According to some alternative embodiments, a first (passive) spectral filter may be employed to filter first incident LB **105a** into a first spectrum, and a second (passive) spectral filter may be employed to filter second incident LB **105b** into a second spectrum. In such embodiments, in order to allow separately sensing each of returned LBs **125,** an additional spectral filter, positioned between the spectral filters and sensor **114,** and configured to allow selectively filtering therethrough light either in the first spectrum or the second spectrum, may be employed.

It is noted that the spectral filter or the spectral filter arrangement may be used decrease the signal associated with stray light, associated with any one incident LBs **105,** arriving at sensor **114.**

While in **Fig. 1A****,** first surface **12a** and second surface **12b** are shown as sharing a common edge, it is to be understood that scope of the disclosure is not limited to metrology of so shaped samples. In particular, any sample including an external and flat first surface and an external and flat second surface inclined with respect to the first surface but which does not share a common edge therewith, may also undergo metrology utilizing system **100,** as described above.

**Figs. 2A** and **2B** schematically depict an optical-based system **200** for validating perpendicularity of an external and flat surface of a sample relative to at least two other external and flat surfaces of the sample, which are parallel to one another, according to some embodiments. System **200** corresponds to specific embodiments of system **100.** More specifically, **Fig. 2A** provides a side-view of system **200** and a sample **20** being inspected by system **200,** according to some embodiments. Sample **20** may be an optical element, such as a prism, a waveguide, or a beam splitter. According to some embodiments, the prism may be shaped as a polyhedron. According to some embodiments, and as depicted in **Figs. 2A** and **2B****,** a cross-section of sample **20,** taken in parallel to the *zx*-plane, may define a polygon.

Sample **20** includes an external, flat first surface **22a,** an external, flat second surface **22b,** and an external, flat third surface **22c.** First surface **22a** and third surface **22c** are nominally parallel by design. Further, sample **20** is manufactured to exhibit a nominal inclination angle of 90° between first surface **22a** and second surface **22b.** However, due to fabrication imperfections an actual inclination angle of second surface **22b** relative to first surface **22a,** labelled in **Figs. 2A** and **2B** as χ', will generally differ from 90°.

It is noted that using state-of-the-art manufacturing techniques, (manufacturing) tolerances for the actual angle between surfaces, which are fabricated to be parallel, are significantly smaller than tolerances for the actual angle between surfaces, which are fabricated to be non-parallel. Hence, since first surface **22a** and third surface **22c** are manufactured to be parallel, the deviation from the parallelism thereof is expected to be negligible as compared to the deviation of the actual inclination angle χ' from 90°. Accordingly, an actual angle ψ' (also referred to as "the actual supplementary angle") between second surface **22b** and third surface **22c** may be taken to equal 180° - χ', i.e. the supplementary angle to the actual inclination angle χ'. (The nominal value of the actual supplementary angle ψ' is 90°.)

System **200** includes a LFC **202** and an ICA **204.** LFC **202** corresponds to specific embodiments of LFC **102** and is configured to nominally fold light by 90°. According to some embodiments, LFC **202** is a prism, one or more mirrors, or a diffraction grating, nominally configured to fold by 90° light incident thereon in a direction perpendicular to first surface **22a.**

LFC **202** is a pentaprism or a like-function prism (i.e. insensitive to variations in pitch).

ICA **204** corresponds to specific embodiments of ICA **104** and includes a light source (not shown), a sensor (not shown), and, optionally, optical equipment (not shown), which correspond to specific embodiments of light source **112,** sensor **114,** and optical equipment **118,** respectively. According to some embodiments, TCA **204** includes an autocollimator **240.** Autocollimator **240** may be configured to generate a collimated LB **201.** A first incident LB **205a** and a second incident LB **205b** form sub-beams of LB **201.** According to some embodiments, and as depicted in **Figs. 2A** and **2B****,** ICA **204** may additionally include a pair of blocking elements **246a** and **246b,** allowing to selectively block each of first incident LB **205a** and second incident LB **205b.** According to some embodiments, each of blocking elements **246a** and **246b** may be a shutter (e.g. controllable by controller **208).**

First incident LB **205a** is directed at sample **20** and second incident LB **205b** is directed at LFC **202.** According to some embodiments, and as depicted in **Fig. 2A****,** ICA **204** and sample **20** are positioned and oriented, such that first incident LB **205a** is incident on first surface **22a** perpendicularly thereto. First incident LB **205a** (or at least a portion thereof) is reflected off first surface **22a** - as indicated by a first returned LB **225a.** First returned LB **225a** is sensed by autocollimator **240.**

LFC **202** is configured to nominally fold second incident LB **205b** by 90°. More precisely, LFC **202** is configured to fold second incident LB **205b,** such that a (first) folded LB **213b** (obtained by the folding of second incident LB **205b)** is *nominally* directed at 90° relative to second incident LB **205b** and (nominally) perpendicularly to second surface **12b.** In practice, due to manufacturing imperfections and alignment imprecision wherein LFC **202** is sensitive to variations in pitch, an actual light folding angle χ" of LFC **202** may slightly deviate from 90°. As elaborated on below, by flipping sample **20,** so as to invert first surface **22a** and third surface **22c** (while maintaining a nominal orientation of second surface **22b** relative to LFC **202),** and repeating the measurement described in the description of **Fig. 2B****,** the effect of manufacturing imperfections of LFC **202** may be cancelled out or substantially cancelled out.

Folded LB **213b** impinges on second surface **22b** at a first incidence angle η₁. The first incidence angle η₁ depends on the deviation Δχ' = 90° - χ' (i.e. the deviation in the inclination of second surface **22b** from the nominal inclination), as well as the deviation Δχ" = 90° - χ" (i.e. the deviation in the actual light folding angle of LFC **202** from 90°). A normal to second surface **22b** is indicated in **Fig. 2A** by a (straight) dotted line C₁.

Folded LB **213b** (or at least a portion thereof) is specularly reflected off second surface **22b** (i.e. at a return angle ζ₁ equal to minus the first incidence angle η₁), as indicated by a (first) reflected LB **217b.** Reflected LB **217b** travels back towards LFC **202** and is folded by LFC **202** at the actual light folding angle χ" resulting in a second returned LB **225b.** Second returned LB **225b** is sensed by sensor **214.**

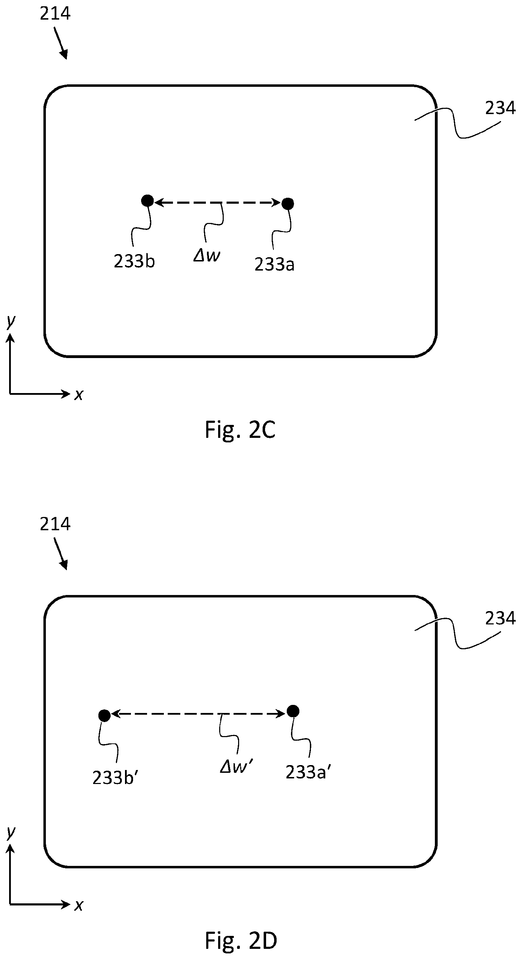

An angle δ₁ between second returned LB **225b** and first returned LB **225a** - also referred to as "the first angular deviation" - equals 2 · ζₗ. The angle δ₁ thus depends on Δχ'. **Fig. 2C** schematically depicts a first spot **233a** and a second spot **233b** formed by first returned LB **225a** and second returned LB **225b,** respectively, on a photosensitive surface **234** of autocollimator **240,** according to some embodiments. *w*₁ and *w*₂ are the horizontal coordinates (i.e. as measured along the x-axis) of first spot **233a** and second spot **233b,** respectively. The angle δ₁ may be directly inferred from the difference Δ*w* = *w*₂ - *w*₁.

Referring to **Fig. 2B****,** as compared to **Fig. 2A****,** sample **20** has been flipped such that first surface **22a** and third surface **22c** are inverted (while maintaining the nominal orientation of second surface **22b** relative to LFC **202).**

Third incident LB **205a'** is directed at sample **20,** perpendicularly thereto, and fourth incident LB **205b'** is directed at LFC **202.** Third incident LB **205a'** (or at least a portion thereof) is reflected off third surface **22c -** as indicated by a third returned LB **225a'.** Third returned LB **225b'** is sensed by sensor **214.**

Fourth incident LB **205b'** impinges on LFC **202,** resulting in a second folded LB **213b'.** Second folded LB **213b'** impinges on second surface **22b** at a second incidence angle η₂. The second incidence angle η₂ depends on a deviation Δψ' = 90° - ψ' (i.e. the deviation of the actual supplementary angle ψ' from 90°), as well as the deviation Δχ" = 90° - χ". A normal to second surface **22b** is indicated in **Fig. 2B** by a (straight) dotted line C₂.

Fourth incident LB **205b'** is (at least in part) specularly reflected off second surface **22b** (i.e. at a return angle ζ₂ equal to minus the second incidence angle η₂), as indicated by a second reflected LB **217b'.** Second reflected LB **217b'** travels back towards LFA **202** and is folded by LFA **202** at the actual light folding angle χ", as indicated by a fourth returned LB **225b'.** Fourth returned LB **225b'** is sensed by sensor **214.**

An angle δ₂ between fourth returned LB **225b'** and third returned LB **225a'** - also referred to as "the second angular deviation" - equals 2 · ζ₂. The angle δ₂ thus depends on Δψ' and, thereby, on Δχ' (since χ' + ψ' = 180°, so that Δψ' = -Δχ'). **Fig. 2D** schematically depicts a third spot **233a'** and a fourth spot **233b'** formed by third returned LB **225a'** and fourth returned LB **225b',** respectively, on photosensitive surface **234** of sensor **214,** according to some embodiments. *w*₁' and *w*₂' are the horizontal coordinates of third spot **233a'** and fourth spot **233b',** respectively. The angle δ₂ may be directly inferred from the difference Δ*w*' = *w*₂' *- w*₁'*.*

While in **Figs. 2C** and **2D** Δ*w* and Δ*w*' are both shown as being negative (so that δ₁ and δ₂ are both negative), it is to be understood that generally Δ*w* and Δ*w*' may have opposite signs (so that δ₁ and δ₂ will have opposite signs), or may both be positive (so that δ₁ and δ₂ are both positive).

Each of the measured angles δ₁ and δ₂ may be used to provide a respective estimate of the deviation angle Δχ'. Absent any imperfections in system **200,** η₂ would equal -η₁ and δ₁ would equal -δ₂. However, in practice, the two estimates will generally differ due to the actual light folding angle deviating from its nominal value. Since both δ₁ and δ₂ have the same (when the LFC is insensitive to variations in pitch), or substantially the same, dependence, the actual light folding angle χ" (i.e. both δ₁ and δ₂ increase as χ" is increased and decrease as χ" is decreased), the deviation in the light folding angle may be cancelled out, or substantially cancelled out, by averaging over the two estimates of the deviation angle Δχ'. That is, <Δχ'> equals, or substantially equals, -(δ₁ - δ₂)/4. In particular, in embodiments wherein ICA **204** is or includes an autocollimator, <Δχ'> equals, or substantially equals, -(Δ*w* - Δ*w*')/(2 · *f*₀), wherein *f*₀ is the focal length of the collimating lens of the autocollimator.

According to some embodiments, first surface **22a,** second surface **22b,** and third surface **22c** may be coated, or temporarily coated, by a reflective coating, so that light incident thereon is maximally reflected or reflection therefrom is at least increased. According to some embodiments, wherein autocollimator **240** is configured to generate a polychromatic LB, first surface **12a** and third surface **12c** may be coated a first coating configured to reflect light in a first spectrum, and second surface **12b** may be coated by a second coating configured to reflect light in a second spectrum, which differs from the first spectrum. In such embodiments, autocollimator **240** may include a spectral filter configured to allow selectively filtering therethrough light in the first spectrum or the second spectrum, thereby facilitating separately sensing each of returned LBs **225.**

According to some embodiments, blocking elements **246a** and **246b** may be spectral filters (a specific example being dichroic filter) configured to block light in the second spectrum and the first spectrum. In such embodiments, in order to allow separately sensing each of returned LBs **225,** an additional spectral filter, positioned between blocking elements **246** and autocollimator **240** or included in autocollimator **240,** and configured to allow selectively filtering therethrough light in the first spectrum or the second spectrum, may be employed.

While in **Figs. 2A** and **2B****,** second surface **22b** is shown as extending from first surface **22a** to third surface **22c,** it is to be understood that scope of the disclosure is not limited to metrology of so shaped samples. In particular, any sample including an external, flat first surface, an external, flat second surface inclined with respect to the first surface, and an external, flat third surface parallel to the first surface, such that the second surface does not share a common edge with the first surface and/or does not share a common edge with the third surface, may also undergo metrology utilizing system **200,** as described above.

According to some alternative embodiments, not depicted in **Figs. 2A** and **2B****,** light source **212** and optical equipment **218** may be configured to produce an expanded (collimated) laser beam or a pair of parallel and spaced apart (collimated) laser beams, essentially as described above in the description of system **100.** According to still other embodiments, ICA **204** may be or includes an interferometric setup, as described above in the description of system **100.**

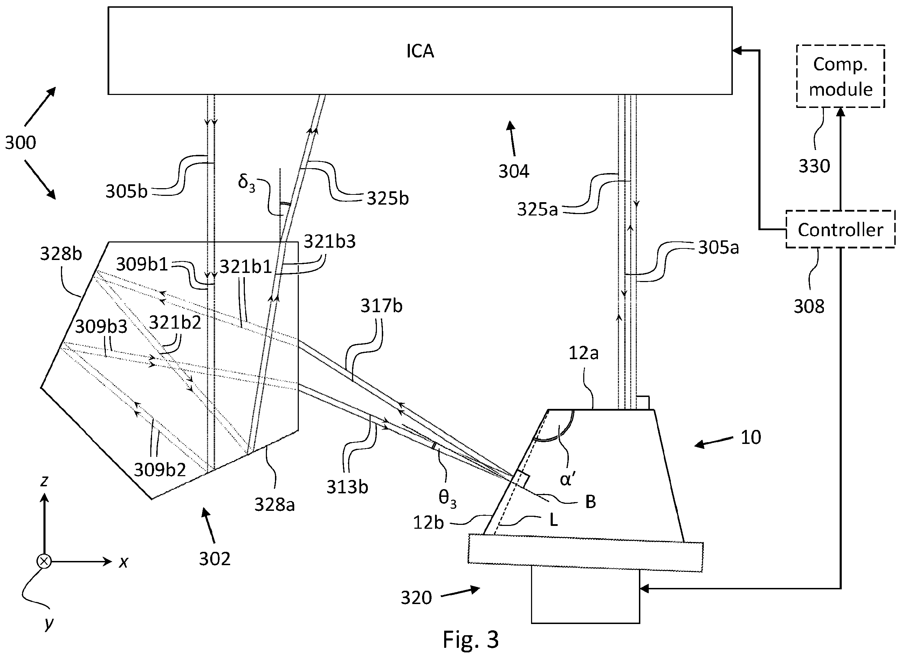

**Fig. 3** schematically depict an optical-based system **300** for validating the angle between two external, flat surfaces of a sample, according to some embodiments. System **300** corresponds to specific embodiments of system **100,** wherein the LFC is or includes a prism. More specifically, **Fig. 3** provides a side-view of system **300** and sample **10** being inspected by system **300,** according to some embodiments. System **300** includes a prism **302,** an ICA **304** (components thereof are not shown), and orienting infrastructure **320.** According to some embodiments, and as depicted in **Fig. 3****,** system **300** further includes a controller **308,** and, optionally, a computational module **330.** Prism **302,** ICA **304,** orienting infrastructure **320,** controller **308,** and computational module **330** correspond to specific embodiments of LFC **102,** ICA **104,** orienting infrastructure **120,** controller **108,** and computational module **130,** respectively.

The prism **302** is insensitive to variations in pitch - i.e. rotations about the *y*-axis - at least across a continuous range of pitch angles. According to some such embodiments, and as depicted in **Fig. 3****,** prism **302** may be a pentaprism, or a like-function prism - e.g. a prism including an even number of internally reflecting surfaces. According to some alternative embodiments, not depicted in **Fig. 3****,** instead of prism **322,** system **300** may include two mirrors, set with respect to one another at the same angle at which the two surfaces of prism **302** (a pentaprism first surface **328a** and a pentaprism second surface **328b),** which internally reflect a transmitted portion of second incident LB **305b,** are set.

Shown in **Fig. 3** are a first incident LB **305a,** a first returned LB **325a,** a second incident LB **305b,** a folded LB **313b,** a reflected LB **317b,** and a second returned LB **325b,** which correspond to specific embodiments of first incident LB **105a,** first returned LB **125a,** second incident LB **105b,** folded LB **113b,** reflected LB **117b,** and a second returned LB **125b,** respectively. Also shown are the trajectories of second incident LB **305b** and reflected LB **317b** inside prism **302** after entry thereof thereinto. Penetrating portions of second incident LB **305b** after entry into prism **302,** after reflection therein, and after two reflections therein, are numbered **309b1, 309b2,** and **309b3,** respectively. Penetrating portions of reflected LB **317b** after refraction into prism **302,** after reflection therein, and after two reflections therein, are numbered **321b1, 321b2,** and **321b3,** respectively.

An incidence angle of folded LB **313b** on second surface **12b** is labelled as θ₃. An angular deviation of second returned LB **325b** from first returned LB **325a** is labelled as δ₃.

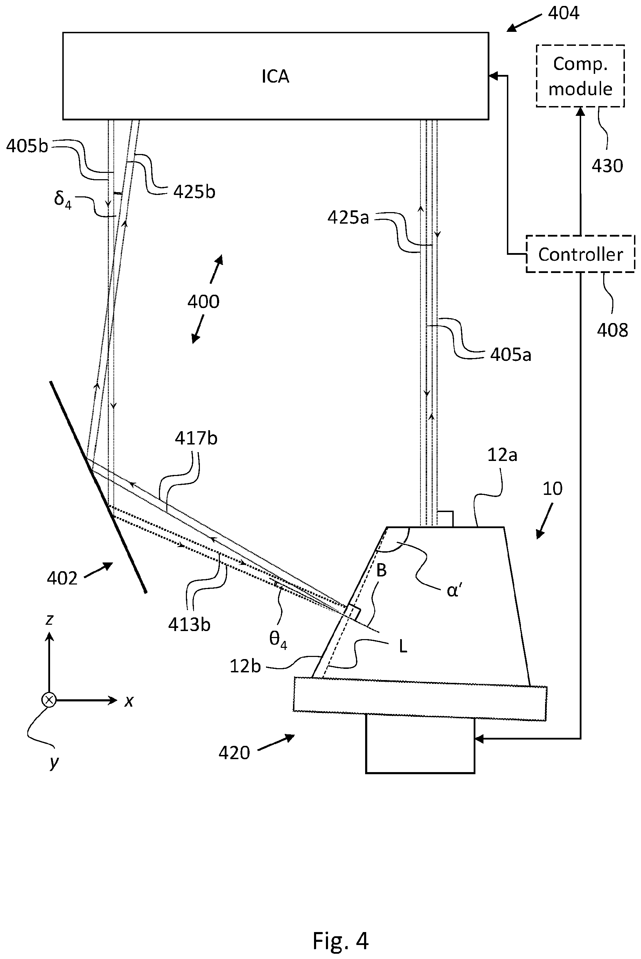

**Fig. 4** schematically depict an optical-based system **400** for validating the angle between two external, flat surfaces of a sample, according to some embodiments. System **400** corresponds to specific embodiments of system **100,** wherein the LFC is or includes a mirror. More specifically, **Fig. 4** provides a side-view of system **400** and sample **10** being inspected by system **400,** according to some embodiments. System **400** includes a mirror **402,** an ICA **404** (components thereof are not shown), and orienting infrastructure **420.** According to some embodiments, and as depicted in **Fig. 4****,** system **400** further includes a controller **408,** and, optionally, a computational module **430.** Mirror **402,** ICA **404,** orienting infrastructure **420,** controller **408,** and computational module **430** correspond to specific embodiments of LFC **102,** ICA **104,** orienting infrastructure **120,** controller **108,** and computational module **130,** respectively.

According to some embodiments, and as depicted in **Fig. 4****,** mirror **402** may be a plane mirror. Indicated in **Fig. 4** are a first incident LB **405a,** a first returned LB **425a,** a second incident LB **405b,** a folded LB **413b,** a reflected LB **417b,** and a second returned LB **425b,** which correspond to specific embodiments of first incident LB **105a,** first returned LB **125a,** second incident LB **105b,** folded LB **113b,** reflected LB **117b,** and a second returned LB **125b,** respectively.

An incidence angle of folded LB **413b** on second surface 12b is labelled as θ₄. An angular deviation of second returned LB **425b** from first returned LB **425a** is labelled as δ₄.

### Methods

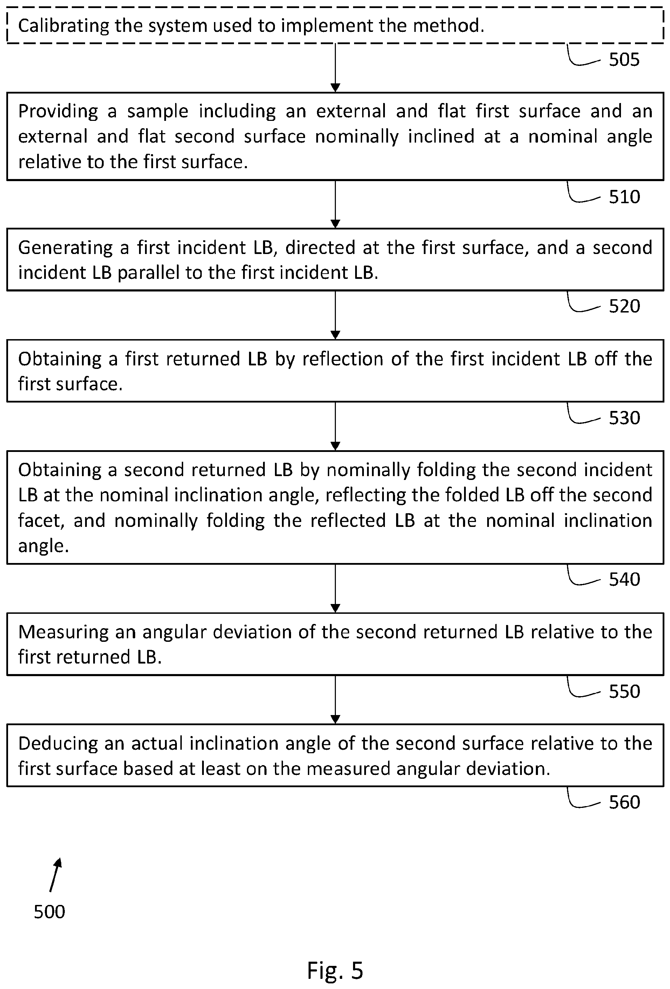

According to an aspect of some embodiments, there is provided an optical-based method for metrology of external, flat surfaces of samples. The method may be employed to validate an orientation of one external and flat surface of a sample relative to another external and flat surface of the sample. **Fig. 5** presents a flowchart of such a method, an optical-based method **500,** according to some embodiments. Method **500** may include:
- An optional stage **505,** wherein the system (e.g. system **100)** used to implement the method is calibrated.
- A stage **510,** wherein a sample (e.g. sample **10),** which is to be tested, is provided. The sample includes: an external, flat first surface (e.g. first surface **12a)** and an external, flat second surface (e.g. second surface **12b)** nominally inclined at a nominal inclination angle (e.g. the nominal inclination angle α) relative to the first surface.
- A stage **520,** wherein a first incident LB (e.g. first incident LB **105a),** directed at the first surface, and a second incident LB (e.g. second incident LB **105b),** parallel to the first incident LB, are generated (e.g. by light source **112** and optical equipment **118).**
- A stage **530,** wherein a first returned LB (e.g. first returned LB **125a)** is obtained by reflecting the first incident LB off the first surface.
- A stage **540,** wherein a second returned LB (e.g. second returned LB **125b)** is obtained by nominally folding the second incident LB at a light folding angle equal to the nominal inclination angle, reflecting the folded LB (e.g. folded LB **113b)** off the second surface, and nominally folding the reflected LB (e.g. reflected LB **117b)** at the light folding angle.
- A stage **550,** wherein an angular deviation of the second returned LB relative to the first returned LB is measured (e.g. using sensor **114** or autocollimator **240).**
- A stage **560,** wherein an actual inclination angle of the second surface relative to the first surface is deduced based at least on the measured angular deviation.

As used herein, the term "obtaining" may be employed both in an active and a passive sense. Thus, for example, in stage **540** the first returned LB may be obtained not due to any operation implemented in stage **540** but rather due to the generation of the first incident LB in stage **520.** Generally, a stage may describe an active operation performed by a user or by the system used to implement the method, and/or the results or effects of one or more operations performed in one or more earlier stages.

Method **500** may be implemented employing an optical-based system, such as any one of optical-based systems **100, 300,** and **400,** or optical-based systems similar thereto, as described above in the respective descriptions thereof. In particular, according to some embodiments, method **500** may be autocollimator-based, based on the measurement of distance between laser beams, or may be based on interferometry, as detailed in the description of the various embodiments of system **100.** In stage **540,** the folded LB may be obtained from the second incident LB utilizing any one of LFC **102,** prism **302,** and mirror **402,** or a similar function LFC. Similarly, the second returned LB may be obtained from the reflected LB utilizing any one of LFC **102,** prism **302,** and mirror **402,** or a like-function LFC.

According to some embodiments, in stage **520** the first incident LB may be projected on the first surface normally (i.e. perpendicularly) to the first surface. Accordingly, in such embodiments, the folded LB (obtained from the folding of the second incident LB) will *nominally* normally impinge on the second surface. According to some embodiments, in stage **505,** "gold standard" (GS) samples may be employed as part of the calibration the system used to implement method **500.** More specifically, given a sample to be tested, a corresponding GS sample (i.e. a sample that is known to exhibit the requisite geometry to high precision) may be employed in calibrating the system. In particular, the GS sample may be employed to align an orientable stage (e.g. stage **122),** on which the sample is mounted, and the LFC, such that the folded LB perpendicularly impinges (to the precision afforded by the GS sample) on a second surface (analogous to second surface **12b)** of the GS sample. The GS sample may further be employed to orient the stage, such that the first incident LB impinges perpendicularly on a first surface (analogous to first surface **12a)** of the GS sample. An autocollimator, whether part of the ICA (e.g. ICA **104)** of the system, or not included in the system, may be used to perform the alignment and to validate the perpendicularity of the first incident LB.

According to some embodiments, calibration or additional calibration may be performed after stage **510,** once the sample to be tested has been provided and disposed e.g. on the orientable stage. The additional calibration may include, for example, orienting or re-orienting the stage (e.g. using an autocollimator) such that the first incident LB perpendicularly impinges on the first surface (of the sample to be tested).

According to some embodiments, in stage **520,** an autocollimator (e.g. autocollimator **240)** may be employed to generate a single incident LB, of which the first incident LB and the second incident LB constitute sub-beams. Alternatively, an expanded (collimated) laser beam may be generated, of which the first incident LB and the second incident LB constitute sub-beams. Still according to some other embodiments, a pair of parallel and spaced-apart laser beams may be generated, to which the first incident LB and the second incident LB respectively correspond.

According to some embodiments, in stages **530** and **540** an autocollimator (e.g. autocollimator **240,** and, more generally, in embodiments wherein an autocollimator is used in preparing the incident LBs, that same autocollimator) may be employed to sense the returned LBs. According to some embodiments, shutters and/or spectral filters may be employed to selectively block, or partially block, the first returned LB or the second returned LB, essentially as described above in the description of **Fig. 1A** and **Figs. 2A** and **2B.** Beyond facilitating the attribution of each of a pair of spots (on a photosensitive surface of a light or image sensor (e.g. sensor **114)** utilized to sense the returned LBs) to the returned LB, which has formed the spot, the blocking of one returned LB, while sensing the other returned LB, may serve to increase measurement precision by attenuating the signal associated with stray light.

According to some embodiments, particularly embodiments wherein stages **520, 530,** and **540** are implemented employing an autocollimator (such as autocollimator **240),** in stage **550,** the angular deviation δ̃ of the second returned LB relative to the first returned LB is computed via δ̃ = (*ũ*₂ *- ũ*₁)/*f̃. ũ*₁ and *ũ*₂ are the horizontal coordinates of a first spot and a second spot (e.g. first spot **133a** and second spot **133b)** formed on a photosensitive surface (e.g. photosensitive surface **134)** of the autocollimator by the first returned LB and the second returned LB, respectively. *f̃* is the focal length of a collimating lens of the autocollimator.

In stage **560,** the value of an actual inclination angle α̃' may be obtained from the (value of the) angular deviation δ̃ via the relation α̃' = α̃ - Δα̃' = α̃ + 8/2, wherein α̃ is the nominal inclination angle of the second surface relative to the first surface (per the definition of angles - adopted in the description of **Figs. 1A-4** - as increasing clockwise). More generally, α̃' may equal about α̃ + δ̃/2, e.g. α̃' may be between α̃ + 0.475 · δ and α̃ + 0.525 · δ, between α̃ + 0.45 · δ and α̃ + 0.55 · δ, or even between α̃ + 0.4 · δ and α̃ + 0.6 · δ. Each possibility corresponds to separate embodiments. According to some embodiments, an uncertainty in the actual inclination angle may further be computed in stage **560,** based at least on manufacturing tolerances and imperfections of the ICA configured to generate the incident LBs and measure the angular deviation between the returned LBs. According to some embodiments, the uncertainty in the inclination angle may be computed additionally taking into account the uncertainty in the folding angle α̃".

**Fig. 6** presents a flowchart of an optical-based method **600** for external, flat surface-metrology of samples, according to some embodiments. Method **600** corresponds to specific embodiments of method **500** and may be employed to validate perpendicularity of an external and flat surface of a sample relative to at least two other external and flat surfaces of the sample, which are parallel to one another. Method **600** may include:
- A stage **605,** wherein a sample (e.g. sample **20)** to be tested is provided. The sample includes an external, flat first surface (e.g. first surface **22a),** an external, flat second surface (e.g. second surface **22b)** nominally inclined at a nominal inclination angle relative to the first surface, and an external, flat third surface (e.g. third surface **22c)** parallel to the first surface.
- A stage **610,** wherein a first incident LB (e.g. first incident LB **205a),** directed normally to the first surface, and a second incident LB (e.g. second incident LB **205b),** parallel to the first incident LB, are generated (e.g. by autocollimator **240).**
- A stage **615,** wherein a first returned LB (e.g. first returned LB **225a)** is obtained from a reflection of the first incident LB off the first surface.
- A stage **620,** wherein a second returned LB (e.g. second returned LB **225b)** is obtained by nominally folding the second incident LB at a light folding angle equal to the nominal inclination angle, reflecting the folded LB (e.g. first folded LB **213b)** off the second surface, and nominally folding the reflected LB (e.g. first reflected LB **217b)** at the light folding angle.
- A stage **625,** wherein a first angular deviation of the second returned LB relative to the first returned LB is measured.
- A stage **630,** wherein the sample is flipped, so as to invert the first and third surfaces, while maintaining a nominal orientation of the second surface.
- A stage **635,** wherein a third incident LB (e.g. third incident LB **205a'),** directed normally to the third surface, and a fourth incident LB (e.g. fourth incident LB **205b'),** parallel to the third incident LB, are generated (e.g. by autocollimator **240).**
- A stage **640,** wherein a third returned LB (e.g. third returned LB **225a')** is obtained from a reflection of the third incident LB off the third surface.
- A stage **645,** wherein a fourth returned LB (e.g. fourth returned LB **225b')** is obtained by nominally folding the fourth incident LB at the light folding angle, reflecting the folded LB (e.g. second folded LB **213b')** off the second surface, and nominally folding the reflected LB (e.g. second reflected LB **217b')** at the light folding angle.
- A stage **650,** wherein a second angular deviation of the fourth returned LB and the third returned LB is measured.
- A stage **655,** wherein an actual inclination angle of the second surface relative to the first surface is deduced based on the measured first angular deviation and second angular deviation.

Method **600** may be implemented employing an optical-based system, such as optical-based systems **200** or an optical-based system similar thereto, as described above in the description of **Figs. 2A-2D****.** In particular, according to some embodiments, method **600** may be autocollimator-based, based on the measurement of distance between laser beams, or based on interferometry. In stage **620,** the first folded LB and the second returned LB may be obtained from the second incident LB and the first reflected LB, respectively, utilizing LFC **202** or a like-function LFC. The LFC may be or include a prism (e.g. a pentaprism), a mirror, or a diffraction grating, nominally configured to fold by 90° light incident thereon in a direction perpendicular to first surface **22a** Similarly, in stage **645,** the second folded LB and the fourth returned LB may be obtained from the fourth incident LB and the second reflected LB, respectively, utilizing LFC **202** or a like-function LFC.

According to some embodiments, method **600** may include an optional calibration stage (not shown in **Fig. 6****)** similar to stage **505** of method **500.**

According to some embodiments, in stages **610** and **635,** an autocollimator (e.g. autocollimator) may be used to generate the pairs of parallel incident LBs. According to some embodiments, in stages **615, 620, 640,** and **645** an autocollimator (e.g. the autocollimator used in preparing the incident LBs) may be employed to sense the returned LBs. According to some embodiments, shutters and/or spectral filters may be employed to selectively block, or partially block, one of the second returned LB and the first returned LB, and one of the fourth returned LB and the third returned LB, essentially as described above in the description of **Figs. 2A** and **2B****.**

According to some embodiments, particularly embodiments wherein stages **610, 615, 620, 635, 640,** and **645** are implemented employing an autocollimator (such as autocollimator **240),** in stage **625,** the first angular deviation δ̃₁ of the second returned LB relative to the first returned LB is obtained via δ̃₁ = (*w̃*₂ *- w̃*₁)/*f̃*₀. *w̃*₁ and *w̃*₂ are the horizontal coordinates of a first spot and a second spot (e.g. first spot **233a** and second spot **233b)** formed on the photosensitive surface (e.g. photosensitive surface **234)** of the autocollimator by the first returned LB and the second returned LB, respectively. *f̃*₀ is the focal length of a collimating lens of the autocollimator. Similarly, in stage **650,** the second angular deviation δ̃₂ of the fourth returned LB relative to the third returned LB is obtained via δ̃₂ = (*w̃*₂' - *w̃*₁')/*f̃*₀. *w̃*₁' and *w̃*₂' are the horizontal coordinates of a third spot and a fourth spot (e.g. third spot **233a'** and fourth spot **233b')** formed on the photosensitive surface of the autocollimator by the third returned LB and the fourth returned LB, respectively.

In stage **655,** the value of the actual inclination angle χ̃' may be obtained from the (values of the) angular deviations δ̃₁ and δ̃₁ via the relation χ̃' = χ̃ +(δ̃₁ - δ̃₂)/4. More generally, Δχ̃' = χ̃ - χ̃' may equal about -(δ̃₁ - δ̃₂)/4, e.g. Δχ̃' is between 0.235 · (δ̃₂ - δ̃₁) and 0.265 · (δ̃₂ - δ̃₁), between 0.225 · (δ̃₂ - δ̃₁) and 0.275 · (δ̃₂ - δ̃₁), or even between 0.2 · (δ̃₂ - δ̃₁) and 0.3 · (δ̃₂ - δ̃₁), Each possibility corresponds to separate embodiments. According to some embodiments, an uncertainty in the actual inclination angle may further be computed in stage **655,** based least on manufacturing tolerances and imperfections of the ICA configured to generate the incident LBs and measure the angular deviation between the returned LBs.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. No feature described in the context of an embodiment is to be considered an essential feature of that embodiment, unless explicitly specified as such.

Although stages of methods according to some embodiments may be described in a specific sequence, methods of the disclosure may include some or all of the described stages carried out in a different order. A method of the disclosure may include a few of the stages described or all of the stages described. No particular stage in a disclosed method is to be considered an essential stage of that method, unless explicitly specified as such.

Although the disclosure is described in conjunction with specific embodiments thereof, it is evident that numerous alternatives, modifications, and variations that are apparent to those skilled in the art may exist. Accordingly, the disclosure embraces all such alternatives, modifications, and variations that fall within the scope of the appended claims. It is to be understood that the disclosure is not necessarily limited in its application to the details of construction and the arrangement of the components and/or methods set forth herein. Other embodiments may be practiced, and an embodiment may be carried out in various ways.

The phraseology and terminology employed herein are for descriptive purpose and should not be regarded as limiting. Citation or identification of any reference in this application shall not be construed as an admission that such reference is available as prior art to the disclosure. Section headings are used herein to ease understanding of the specification and should not be construed as necessarily limiting.

## Claims

1. An optical-based system for validating angles between external, flat surfaces of samples (10, 20), the
system (100, 200, 300) comprising:
a light folding component (102, 202, 302), LFC, nominally configured to fold light
incident thereon at a nominal inclination angle defined by an external, flat first surface and an external, flat second surface of a sample, wherein a light folding angle of the LFC is insensitive to variations in a pitch thereof; and
an illumination and collection arrangement (104, 204, 304), ICA, comprising:
a light generation assembly configured to (a) project a first incident light beam, LB,
on the first surface, so as to generate a first returned LB by reflection off the first surface, and (b) project a second incident LB on the LFC, in parallel to the first incident LB, so as to generate a second returned LB, by folding by the LFC, reflection off the second surface, and repassage via the LFC, wherein the first incident LB and the second incident LB are complementary portions of a collimated LB; and
at least one sensor (114), configured to measure a first angular deviation of the second returned LB relative to the first returned LB, and/or an eyepiece assembly configured to enable manually measuring the first angular deviation; and
wherein the measured first angular deviation is indicative of an actual inclination angle of the second surface relative to the first surface.

2. The optical-based system of claim 1, wherein the system further comprises orienting infrastructure (120, 220, 320) configured to orient the sample such that the first incident LB normally impinges on the first surface, and a folded LB, obtained by folding of the second incident LB by the LFC, nominally normally impinges on the second surface.

3. The optical-based system of claim 1 or claim 2, comprising the at least one sensor, and further comprising a computational module (130, 230, 330) configured to compute the actual inclination angle of the second surface relative to the first surface, based at least on the measured first angular deviation.

4. The optical-based system of any one of claims 1 to 3, wherein the ICA further comprises a pair of blocking elements (246a, 246b) configured to allow selectively blocking each of the first incident LB and the second incident LB, wherein wherein the ICA is or comprises an autocollimator, the autocollimator comprising the light source and the at least one sensor, wherein the system further comprises orienting infrastructure (120, 220, 320) configured to orient the sample such that the first incident LB normally impinges on the first surface, and/or a folded LB, obtained by folding of the second incident LB by the LFC, nominally normally impinges on the second surface, and wherein the system further comprises a computational module (130, 230, 330) configured to compute the actual inclination angle of the second surface relative to the first surface, based at least on the measured first angular deviation.

5. The optical-based system of any one of claims 1 to 4, wherein the LFC comprises a prism, wherein the prism is a pentaprism or a like-function prism.

6. The optical-based system of any one of claims 1 to 5, wherein the system comprises the at least one sensor, wherein the light generation assembly comprises a light source (112) and optical equipment (118), wherein the light source is configured to generate a single LB, wherein the optical equipment is configured to collimate the single LB, thereby obtaining the collimated LB.

7. The optical-based system of claim 6, the ICA is or comprises an autocollimator (240), the autocollimator comprising the light source and the at least one sensor, wherein the system further comprises orienting infrastructure (120, 220, 320) configured to orient the sample such that the first incident LB normally impinges on the first surface, and/or a folded LB, obtained by folding of the second incident LB by the LFC, nominally normally impinges on the second surface, and wherein the system further comprises a computational module (130, 230, 330) configured to compute the actual inclination angle of the second surface relative to the first surface, based at least on the measured first angular deviation.

8. The optical-based system of any one of claims 3 to 7, comprising the at least one sensor and the computational module, wherein the nominal inclination angle is 90° and the sample further comprises an external, flat third surface, which is parallel to the first surface, and wherein the computational module is configured to compute the actual inclination angle additionally taking into account a measured second angular deviation of a fourth returned LB relative to a third returned LB, obtained by, with the sample flipped, such that the first surface and the third surface are inverted, (*a'*) projecting a third incident LB on the third surface of the sample, so as to generate the third returned LB by reflection off the third surface, and (*b'*) projecting a fourth incident LB on the LFC, in parallel to the third incident LB, so as to generate the fourth returned LB by folding thereof by the LFC, reflection off the second surface, and repassage via the LFC.

9. The optical-based system of claim 8, wherein the computational module is further configured to compute an uncertainty in the computed value of the actual inclination angle taking into account at least manufacturing tolerances and imperfections of the LFC and the ICA.

10. The optical-based system of claim 9, further comprising the orienting infrastructure, wherein the computational module is configured to compute the uncertainty in the computed value of the actual inclination angle additionally taking into account manufacturing tolerances and imperfections of the orienting infrastructure.

11. An optical-based method for validating angles between external, flat surfaces of samples (10, 20),
the method comprising:
providing a sample comprising an external, flat first surface and an external, flat second surface nominally inclined at a nominal inclination angle relative to the first surface;
generating a first incident light beam, LB, directed at the first surface, and a second incident LB parallel to the first incident LB;
obtaining a first returned LB by reflection of the first incident LB off the first surface;
obtaining a second returned LB by folding by a light folding component (102, 202, 302), LFC, the second incident LB at a light folding
angle nominally equal to the nominal inclination angle, reflecting the folded LB off the second surface, and folding the reflected LB at the light folding angle by repassage via the LFC;
measuring a first angular deviation of the second returned LB relative to the first returned LB; and
deducing an actual inclination angle of the second surface relative to the first surface, based at least on the measured first angular deviation;
wherein the first incident LB and the second incident LB are complementary portions of a single collimated LB; and
wherein the light folding angle is insensitive to variations in a pitch of the LFC.

12. The optical-based method of claim 11, wherein the first incident LB is directed at the first surface perpendicularly thereto.

13. The optical-based method of claim 11 or claim 12, wherein the folding is implemented utilizing the LFC, wherein the LFC is or comprises a pentaprism or a like-function prism.

14. The optical-based method of any one of claims 11 to 13, wherein the first angular deviation is measured using an autocollimator, wherein the measured first angular deviation between the returned LBs is equal to, or about equal to, *Δu*/*f,* wherein Δ*u* is a difference between a coordinate of a first spot and a corresponding coordinate of a second spot on a photosensitive surface of the autocollimator, *f* is the focal length of a collimating lens of the autocollimator, and wherein the first spot is formed by the first returned LB and the second spot is formed by the second returned LB.

15. The optical-based method of any one of claims 11 to 14, wherein the nominal inclination angle is 90° and the sample comprises an external, flat third surface parallel to the first surface, wherein the first incident LB is directed at the first surface perpendicularly thereto, and wherein the method further comprises, following the measuring of the first angular deviation:
flipping the sample, so as to invert the first and third surfaces while maintaining a nominal orientation of the second surface relative to the LFC;
preparing a third incident LB, directed at the third surface, normally thereto, and a fourth incident LB parallel to the third incident LB;
obtaining a third returned LB by reflection of the third incident LB off the third surface;
obtaining a fourth returned LB by folding the fourth incident LB at a light folding angle nominally equal to the nominal inclination angle, reflection thereof off the second surface, and folding thereof at the light folding angle;
measuring a second angular deviation of the fourth returned LB relative to the third returned LB; and
wherein, in the deducing of the actual inclination angle, the actual inclination angle is deduced additionally taking into account the measured second angular deviation.

## Patentansprüche

1. Optikbasiertes System zum Validieren von Winkeln zwischen externen, ebenen Oberflächen von Proben (10, 20), wobei das System (100, 200, 300) umfasst:
eine Lichtfaltkomponente (102, 202, 302) (LFC), die nominal dazu konfiguriert ist, Licht, das darauf einfällt, in einem nominalen Neigungswinkel zu falten, der von einer externen, ebenen ersten Oberfläche und einer externen, ebenen zweiten Oberfläche einer Probe definiert wird, wobei ein Lichtfaltwinkel der LFC für Variationen in einer Steigung davon unempfindlich ist; und
eine Beleuchtungs- und Sammelanordnung (104, 204, 304) (ICA), umfassend:
eine Lichterzeugungsbaugruppe, die dazu konfiguriert ist, (a) einen ersten auftreffenden Lichtstrahl, LB, auf der ersten Oberfläche zu projizieren, um einen ersten zurückgestrahlten LB durch Reflektion von der ersten Oberfläche zu erzeugen, und (b) einen zweiten auftreffenden LB parallel zu dem ersten auftreffenden LB auf die LFC zu projizieren, um einen zweiten zurückgestrahlten LB durch Reflexion von der zweiten Oberfläche durch Falten durch die LFC zu erzeugen und mittels der LFC erneut durchzuführen, wobei der erste auftreffende LB und der zweite auftreffende LB komplementäre Teile eines kollimierten LB sind; und
mindestens einen Sensor (114), der dazu konfiguriert ist, eine erste Winkelabweichung des zweiten zurückgestrahlten LB in Bezug auf den ersten zurückgestrahlten ersten LB zu messen, und/oder eine Visierbaugruppe, die dazu konfiguriert ist, ein manuelles Messen der ersten Winkelabweichung zu ermöglichen; und
wobei die gemessene erste Winkelabweichung einen tatsächlichen Neigungswinkel der zweiten Oberfläche in Bezug auf die erste Oberfläche angibt.

2. Optikbasiertes System nach Anspruch 1, wobei das System ferner ein Ausrichten einer Infrastruktur (120, 220, 320) umfasst, die dazu konfiguriert ist, die Probe auszurichten, so dass der erste auftreffende LB lotrecht auf die erste Oberfläche auftrifft, und ein gefalteter LB, der durch Falten des zweiten auftreffenden LB durch die LFC erhalten wird, nominal lotrecht auf die zweite Oberfläche auftrifft.

3. Optikbasiertes System nach Anspruch 1 oder Anspruch 2, umfassend den mindestens einen Sensor und ferner umfassend ein Rechenmodul (130, 230, 330), das dazu konfiguriert ist, den tatsächlichen Neigungswinkel der zweiten Oberfläche in Bezug auf die erste Oberfläche zumindest auf der Basis der gemessenen ersten Winkelabweichung zu berechnen.

4. Optikbasiertes System nach einem der Ansprüche 1 bis 3, wobei die ICA ferner ein Paar von Blockierungselementen (246a, 246b) umfasst, das dazu konfiguriert ist, ein selektives Blockieren jedes von dem ersten auftreffenden LB und dem zweiten auftreffenden LB zu ermöglichen, wobei die ICA ein Autokollimator ist oder einen Autokollimator umfasst, wobei der Autokollimator die Lichtquelle und den mindestens einen Sensor umfasst, wobei das System ferner eine Ausrichtungsinfrastruktur (120, 220, 320) umfasst, die dazu konfiguriert ist, die Probe auszurichten, so dass der erste auftreffende LB lotrecht auf die erste Oberfläche auftrifft und/oder ein gefalteter LB, der der durch Falten des zweiten auftreffenden LB durch die LFC erhalten wird, nominal lotrecht auf die zweite Oberfläche auftrifft, und wobei das System ferner ein Rechenmodul (130, 230, 330) umfasst, das dazu konfiguriert ist, den tatsächlichen Neigungswinkel der zweiten Oberfläche in Bezug auf die erste Oberfläche zumindest auf der Basis der gemessenen ersten Winkelabweichung zu berechnen.

5. Optikbasiertes System nach einem der Ansprüche 1 bis 4, wobei die LFC ein Prisma umfasst, wobei das Prisma ein Pentaprisma oder ein Prisma mit ähnlicher Funktion ist.

6. Optikbasiertes System nach einem der Ansprüche 1 bis 5, wobei das System den mindestens einen Sensor umfasst, wobei die Lichterzeugungsbaugruppe eine Lichtquelle (112) und eine optische Einrichtung (118) umfasst, wobei die Lichtquelle dazu konfiguriert ist, einen einzigen LB zu erzeugen, wobei die optische Einrichtung dazu konfiguriert ist, den einzigen LB zu kollimieren, wodurch der kollimierte LB erhalten wird.

7. Optikbasiertes System nach Anspruch 6, wobei die ICA ein Autokollimator (240) ist oder einen Autokollimator (240) umfasst, wobei der Autokollimator die Lichtquelle und den mindestens einen Sensor umfasst, wobei das System ferner eine Ausrichtungsinfrastruktur (120, 220, 320) umfasst, die dazu konfiguriert ist, die Probe auszurichten, so dass der erste auftreffende LB lotrecht auf die erste Oberfläche auftrifft und/oder ein gefalteter LB, der der durch Falten des zweiten auftreffenden LB durch die LFC erhalten wird, nominal lotrecht auf die zweite Oberfläche auftrifft, und wobei das System ferner ein Rechenmodul (130, 230, 330) umfasst, das dazu konfiguriert ist, den tatsächlichen Neigungswinkel der zweiten Oberfläche in Bezug auf die erste Oberfläche zumindest auf der Basis der gemessenen ersten Winkelabweichung zu berechnen.

8. Optikbasiertes System nach einem der Ansprüche 3 bis 7, umfassend den mindestens einen Sensor und das Rechenmodul, wobei der nominale Neigungswinkel 90° ist und die Probe ferner eine externe, ebene dritte Oberfläche umfasst, die parallel zu der ersten Oberfläche ist, und wobei das Rechenmodul dazu konfiguriert ist, den tatsächlichen Neigungswinkel zu berechnen, wobei eine gemessene zweite Winkelabweichung eines vierten zurückgestrahlten LB in Bezug auf einen dritten zurückgestrahlten LB zusätzlich berücksichtigt wird, die bei umgedrehter Probe, so dass die erste Oberfläche und die dritte Oberfläche vertauscht sind, (*a'*) Projizieren eines dritten auftreffenden LB auf die dritte Oberfläche der Probe, um den dritten zurückgestrahlten LB durch Reflexion von der dritten Oberfläche zu erzeugen, und (*b'*) Projizieren eines vierten auftreffenden LB parallel zu dem dritten auftreffenden LB auf die LFC, um den vierten zurückgestrahlten LB durch Reflexion von der zweiten Oberfläche durch Falten dieses durch die LFC zu erzeugen und mittels der LFC erneut durchzuführen, erhalten wird.

9. Optikbasiertes System nach Anspruch 8, wobei das Rechenmodul ferner dazu konfiguriert ist, eine Unsicherheit in dem berechneten Wert des tatsächlichen Neigungswinkels zu berechnen, wobei mindestens Herstellungstoleranzen und Imperfektionen der LFC und der ICA berücksichtigt werden.

10. Optikbasiertes System nach Anspruch 9, ferner umfassend die Ausrichtungsinfrastruktur, wobei das Rechenmodul dazu konfiguriert ist, die Unsicherheit in dem berechneten Wert des tatsächlichen Neigungswinkels zu berechnen, wobei Herstellungstoleranzen und Imperfektionen der Ausrichtungsinfrastruktur zusätzlich berücksichtigt werden.

11. Optikbasiertes Verfahren zum Validieren von Winkeln zwischen externen, ebenen Oberflächen von Proben (10, 20),
wobei das Verfahren umfasst:
Bereitstellen einer Probe, umfassend eine externe, ebene erste Oberfläche und eine externe, ebene zweite Oberfläche, die in einem nominalen Neigungswinkel in Bezug auf die erste Oberfläche nominal geneigt ist;
Erzeugen eines ersten auftreffenden Lichtstrahls, LB, der auf die erste Oberfläche gerichtet ist, und eines zweiten auftreffenden LB parallel zu dem ersten auftreffenden LB;
Erhalten eines ersten zurückgestrahlten LB durch Reflexion des ersten auftreffenden LB von der ersten Oberfläche;
Erhalten eines zweiten zurückgestrahlten LB durch Falten des zweiten auftreffenden LB in einem Lichfaltwinkel, der dem nominalen Neigungswinkel nominal gleich ist, durch die Lichtfaltkomponente (102, 202, 302), wobei der gefaltete LB von der zweiten Oberfläche reflektiert wird und der reflektierte LB in dem Lichtfaltwinkel durch erneutes Durchführen mittels der LFC gefaltet wird;
Messen einer ersten Winkelabweichung des zweiten zurückgestrahlten LB in Bezug auf den ersten zurückgestrahlten LB; und
Ableiten eines tatsächlichen Neigungswinkels der zweiten Oberfläche in Bezug auf die erste Oberfläche zumindest auf der Basis der gemessenen ersten Winkelabweichung;
wobei der erste auftreffende LB und der zweite auftreffende LB komplementäre Teile eines einzigen kollimierten LB sind; und
wobei der Lichtfaltwinkel für Variationen in einer Steigung einer LFC unempfindlich ist.

12. Optikbasiertes Verfahren nach Anspruch 11, wobei der erste auftreffende LB auf die erste Oberfläche senkrecht dazu gerichtet ist.

13. Optikbasiertes Verfahren nach Anspruch 11 oder Anspruch 12, wobei das Falten unter Nutzung der LFC implementiert wird, wobei die LFC ein Pentaprisma oder ein Prisma mit ähnlicher Funktion ist.

14. Optikbasiertes Verfahren nach einem der Ansprüche 11 bis 13, wobei die erste Winkelabweichung unter Verwendung eines Autokollimators gemessen wird, wobei die gemessene erste Winkelabweichung zwischen den zurückgestrahlten LB gleich Δ*u*/*f* ist, wobei Δ*u* eine Differenz zwischen einer Koordinate eines ersten Spots und einer entsprechenden Koordinate eines zweiten Spots auf einer lichtempfindlichen Oberfläche des Autokollimators ist, f die Brennweite einer Kollimatorlinse des Autokollimators ist, und wobei der erste Spot von dem ersten zurückgestrahlten LB gebildet wird und der zweite Spot von dem zweiten zurückgestrahlten LB gebildet wird.

15. Optikbasiertes Verfahren nach einem der Ansprüche 11 bis 14, wobei der nominale Neigungswinkel 90° ist und die Probe eine externe, ebene dritte Oberfläche parallel zu der ersten Oberfläche umfasst, wobei der erste auftreffende LB auf die erste Oberfläche senkrecht dazu gerichtet ist, und wobei das Verfahren ferner nach dem Messen der ersten Winkelabweichung umfasst:
Umdrehen der Probe, um die erste Oberfläche und die dritte Oberfläche zu vertauschen, während eine nominale Ausrichtung der zweiten Oberfläche in Bezug auf die LFC aufrechterhalten wird;
Präparieren eines dritten auftreffenden LB, der auf die dritte Oberfläche lotrecht dazu gerichtet ist, und eines vierten auftreffenden LB parallel zu dem dritten auftreffenden LB;
Erhalten eines dritten zurückgestrahlten LB durch Reflexion des dritten auftreffenden LB von der dritten Oberfläche;
Erhalten eines vierten zurückgestrahlten LB durch Falten des vierten auftreffenden LB in einem Lichfaltwinkel, der dem nominalen Neigungswinkel nominal gleich ist, durch Reflexion von der zweiten Oberfläche und Falten dieses in dem Lichtfaltwinkel;
Messen einer zweiten Winkelabweichung des vierten zurückgestrahlten LB in Bezug auf den dritten zurückgestrahlten LB; und
wobei beim Ableiten des tatsächlichen Neigungswinkels der tatsächliche Neigungswinkel abgeleitet wird, wobei die gemessene zweite Winkelabweichung zusätzlich berücksichtigt wird.

## Revendications

1. Système optique pour valider des angles entre des surfaces plates externes d'échantillons (10, 20), le système (100, 200, 300) comprenant :
un composant de déviation de lumière (102, 202, 302), LFC, configuré de manière nominale pour dévier de la lumière incidente sur celui-ci selon un angle d'inclinaison nominal défini par une première surface plate externe et une seconde surface plate externe d'un échantillon, dans lequel un angle de déviation de lumière du LFC est insensible à des écarts de l'inclinaison de celui-ci ; et
un agencement d'éclairage et de collecte (104, 204, 304), ICA, comprenant :
un ensemble de génération de lumière configuré pour (a) projeter un premier faisceau de lumière, LB, incident sur la première surface, de manière à générer un premier LB de retour par réflexion sur la première surface, et (b) projeter un second faisceau de lumière, LB, incident sur le LFC, parallèlement au premier LB incident, de manière à générer un second LB de retour, par déviation par le LFC, réflexion sur la seconde surface, et repassage via le LFC, dans lequel le premier LB incident et le second LB incident sont des parties complémentaires d'un LB collimaté ; et
au moins un capteur (114), configuré pour mesurer un premier écart angulaire du second LB de retour par rapport au premier LB de retour, et/ou un ensemble oculaire configuré pour permettre une mesure manuelle du premier écart angulaire ; et
dans lequel le premier écart angulaire mesuré est indicatif d'un angle d'inclinaison réel de la seconde surface par rapport à la première surface.

2. Système optique selon la revendication 1, dans lequel le système comprend en outre une infrastructure d'orientation (120, 220, 320) configurée pour orienter l'échantillon de telle sorte que le premier LB incident impacte perpendiculairement la première surface, et un second LB dévié, obtenu par déviation du second LB incident par le LFC, impacte perpendiculairement la seconde surface.

3. Système optique selon la revendication 1 ou la revendication 2, comprenant l'au moins un capteur, et comprenant en outre un module de calcul (130, 230, 330) configuré pour calculer l'angle d'inclinaison réel de la seconde surface par rapport à la première surface, sur la base au moins du premier écart angulaire mesuré.

4. Système optique selon l'une quelconque des revendications 1 à 3, dans lequel l'ICA comprend en outre une paire d'éléments de blocage (246a, 246b) configurés pour permettre un blocage sélectif de chacun du premier LB incident et du second LB incident, dans lequel l'ICA est ou comprend un autocollimateur, l'autocollimateur comprenant la source de lumière et l'au moins un capteur, dans lequel le système comprend en outre une infrastructure d'orientation (120, 220, 230) configurée pour orienter l'échantillon de telle sorte que le premier LB incident impacte perpendiculairement la première surface, et/ou un LB dévié, obtenu par déviation du second LB incident par le LFC, impacte de manière nominale perpendiculairement la seconde surface, et dans lequel le système comprend en outre un module de calcul (130, 230, 330) configuré pour calculer l'angle d'inclinaison réel de la seconde surface par rapport à la première surface, sur la base au moins du premier écart angulaire mesuré.

5. Système optique selon l'une quelconque des revendications 1 à 4, dans lequel le LFC comprend un prisme, dans lequel le prisme est un pentaprisme ou un prisme ayant une fonction similaire.

6. Système optique selon l'une quelconque des revendications 1 à 5, dans lequel le système comprend l'au moins un capteur, dans lequel l'ensemble de génération de lumière comprend une source de lumière (112) et un équipement optique (118), dans lequel la source de lumière est configurée pour générer un seul LB, dans lequel l'équipement optique est configuré pour collimater le seul LB, obtenant ainsi le LB collimaté.

7. Système optique selon la revendication 6, dans lequel l'ICA est ou comprend un autocollimateur (240), l'autocollimateur comprenant la source de lumière et l'au moins un capteur, dans lequel le système comprend en outre une infrastructure d'orientation (120, 220, 230) configurée pour orienter l'échantillon de telle sorte que le premier LB incident impacte perpendiculairement la première surface, et/ou un LB dévié, obtenu par déviation du second LB incident par le LFC, impacte de manière nominale perpendiculairement la seconde surface, et dans lequel le système comprend en outre un module de calcul (130, 230, 330) configuré pour calculer l'angle d'inclinaison réel de la seconde surface par rapport à la première surface, sur la base au moins du premier écart angulaire mesuré.

8. Système optique selon l'une quelconque des revendications 3 à 7, comprenant l'au moins un capteur et le module de calcul, dans lequel l'angle d'inclinaison nominal est de 90° et l'échantillon comprend en outre une troisième surface plate externe, qui est parallèle à la première surface, et dans lequel le module de calcul est configuré pour calculer l'angle d'inclinaison réel en prenant en compte également un second écart angulaire mesuré d'un quatrième LB de retour par rapport à un troisième LB de retour, obtenu avec l'échantillon retourné, de telle sorte que la première surface et la troisième surface sont inversées, (*a'*) projetant un troisième LB incident sur la troisième surface de l'échantillon, de manière à générer le troisième LB de retour par réflexion sur la troisième surface, et (*b'*) projetant un quatrième LB incident sur le LFC, parallèlement au troisième LB incident, de manière à générer le quatrième LB de retour par déviation de celui-ci par le LFC, réflexion sur la seconde surface, et repassage via le LFC.

9. Système optique selon la revendication 8, dans lequel le module de calcul est en outre configuré pour calculer une incertitude de la valeur calculée de l'angle d'inclinaison réel en prenant en compte au moins des tolérances de fabrication et des imperfections du LFC et de l'ICA.

10. Système optique selon la revendication 9, comprenant en outre l'infrastructure d'orientation, dans lequel le module de calcul est configuré pour calculer l'incertitude de la valeur calculée de l'angle d'inclinaison réel en prenant en compte également des tolérances de fabrication et des imperfections de l'infrastructure d'orientation.

11. Procédé optique pour valider des angles entre des surfaces plates externes d'échantillons (10, 20), le procédé comprenant :
la fourniture d'un échantillon comprenant une première surface plate externe, une seconde surface plate externe inclinée de manière nominale selon un angle d'inclinaison nominal par rapport à la première surface ;
la génération d'un premier faisceau de lumière, LB, incident dirigé vers la première surface, et d'un second LB incident parallèle au premier LB incident ;
l'obtention d'un premier LB de retour par réflexion du premier LB incident sur la première surface ;
l'obtention d'un second LB de retour par déviation par un composant de déviation de lumière (102, 202, 302), du second LB incident selon un angle de déviation de lumière égal de manière nominale à l'angle d'inclinaison nominal, réflexion du LB dévié sur la seconde surface, et déviation du LB réfléchi selon l'angle de déviation de lumière par repassage via le LFC ;
la mesure d'un premier écart angulaire du second LB de retour par rapport au premier LB de retour ; et
la déduction d'un angle d'inclinaison réel de la seconde surface par rapport à la première surface, sur la base au moins du premier écart angulaire mesuré ;
dans lequel le premier LB incident et le second LB incident sont des parties complémentaires d'un seul LB collimaté ; et
dans lequel l'angle de déviation de lumière est insensible à des écarts d'une inclinaison du LFC.

12. Procédé optique selon la revendication 11, dans lequel le premier LB incident est dirigé vers la première surface perpendiculairement à celle-ci.

13. Procédé optique selon la revendication 11 ou la revendication 12, dans lequel la déviation est mise en œuvre en utilisant le LFC, dans lequel le LFC est ou comprend un pentaprisme ou un prisme ayant une fonction similaire.

14. Procédé optique selon l'une quelconque des revendications 11 à 13, dans lequel le premier écart angulaire est mesuré à l'aide d'un autocollimateur, dans lequel le premier écart angulaire mesuré entre les LB de retour est égal à, ou à peu près égal à, Δ*u*/*f,* dans lequel Δ*u* est une différence entre une coordonnée d'un premier emplacement et une coordonnée correspondante d'un second emplacement sur une surface photosensible de l'autocollimateur, f est la longueur focale d'une lentille de collimation de l'autocollimateur, et dans lequel le premier emplacement est formé par le premier LB de retour et le second emplacement est formé par le second LB de retour.

15. Procédé optique selon l'une quelconque des revendications 11 à 14, dans lequel l'angle d'inclinaison nominal est de 90° et l'échantillon comprend une troisième surface plate externe parallèle à la première surface, dans lequel le premier LB incident est dirigé vers la première surface perpendiculairement à celle-ci, et dans lequel le procédé comprend en outre, après la mesure du premier écart angulaire :
le retournement de l'échantillon, de manière à inverser les première et troisième surfaces tout en maintenant une orientation nominale de la seconde surface par rapport au LFC ;
la préparation d'un troisième LB incident, dirigé vers la troisième surface, perpendiculairement à celle-ci, et d'un quatrième LB incident parallèle au troisième LB incident ;
l'obtention d'un troisième LB de retour par réflexion du troisième LB incident sur la troisième surface ;
l'obtention d'un quatrième LB de retour par déviation du quatrième LB incident selon un angle de déviation de lumière égal de manière nominale à l'angle d'inclinaison nominal, réflexion de celui-ci dévié sur la seconde surface, et déviation de celui-ci selon l'angle de déviation de lumière ;
la mesure d'un second écart angulaire du quatrième LB de retour par rapport au troisième LB de retour ; et
dans lequel, dans la déduction de l'angle d'inclinaison réel, l'angle d'inclinaison réel est déduit en prenant en compte également le second écart angulaire mesuré.
